# EUROPEAN PATENT APPLICATION

(11) **EP 4 711 952 A1**
(43) Date of publication of application: **18.03.2026**
(21) Application number: 25200716.6
(22) Date of filing: 08.09.2025
(51) Int. Cl.: G06F 16/35

(54) **DATASET CLUSTERING AND AI-ASSISTED THEME EXTRACTION**

(30) Priority: 13.09.2024 US 202463694648 P; 30.04.2025 US 202519195276
(71) Applicant: Cohesity, Inc., Santa Clara, California 95054 (US)
(72) Inventor: GOGINENI, Krishnachaitanya, Santa Clara, 95054 (US); STATTON, Gregory, Santa Clara, 95054 (US); POLAVARAPU, Sai Kiran, Santa Clara, 95054 (US)
(74) Representative: EIP

(57) **Abstract**

In general, techniques for dataset clustering and artificial intelligence (AI)-assisted theme extraction are described. In an example, a method comprises computing chunk embeddings for respective chunks obtained from a dataset; storing the chunk embeddings at one or more vector database instances; generating, based on the chunk embeddings, a cluster hierarchy having a plurality of clusters, each cluster of the plurality of clusters including one or more of the chunk embeddings; generating, using a machine learning model, a theme for a cluster of the plurality of clusters, the theme generated by the machine learning model based on respective chunks of the one or more of the chunk embeddings included in the cluster; and storing a tag for each chunk embedding stored in the one or more vector database instances, wherein each tag identifies a cluster associated with the respective chunk embedding and is for use in filtering the chunk embeddings in response to queries.

## Description

### TECHNICAL FIELD

This disclosure relates to data management in computing systems.

### BACKGROUND

Data may be commonly queried to retrieve specific information or datasets from storage systems, enabling data analysis, data recovery, data mining, forensic analysis, and compliance with regulatory requirements.

A document may be a file created and digitally stored. Documents can include PDFs, spreadsheets, image files, emails, text files, word processor files, HTML, XML, transcripts, and presentations, for example. In some cases, text of the documents can be transcribed from media (e.g., speech transcription), encoded in the documents or visible in media (e.g., text displayed in a video, such as closed captioning), or otherwise represented in media.

### SUMMARY

Datasets accessible to a data management platform are often voluminous and can span a large number of themes, which presents challenges to a user seeking to query and thereby understand or gain insights from the datasets. In the context of datasets including documents, a theme refers to a central topic, idea, or subject around which text of the documents is organized.

Conventional systems that process such large datasets typically employ computationally intensive approaches that require scanning entire datasets to identify relevant information, resulting in excessive processing time and inefficient resource utilization. These systems often perform redundant processing of the same data multiple times when executing different queries, leading to suboptimal computational efficiency. Additionally, traditional keyword-based search methods struggle with the semantic complexity of large datasets, requiring complex processing algorithms that scale poorly as dataset size increases.

In general, techniques for dataset clustering and artificial intelligence (AI)-assisted theme extraction are described. For example, a data management platform that implements the described techniques may generate embeddings based on sets of data (hereinafter, "chunks") included within documents of a dataset. The chunks may comprise text, images, metadata, structured data, multimedia content, or other data types. In the context of machine learning, an embedding is a way to represent complex objects, such as chunks, as vectors of real numbers in a lower-dimensional space. These embeddings capture key properties or relationships between the objects, making them more interpretable for machine learning algorithms. As such, embeddings allow high-dimensional data to be compressed into a continuous, dense representation that captures important relationships or patterns. For embeddings generated from chunks, the chunks may be embedded in continuous vector spaces using appropriate embedding techniques for the data type (e.g. Natural Language Processing (NLP) for text, vision models for images, structured embedding techniques for metadata). Similar chunks will have similar vector representations, regardless of their underlying data type.

The data management platform may apply a clustering algorithm to cluster the embeddings and thereby identify a hierarchy of clusters of embeddings representative of chunks, and thereby of associated documents, within the dataset. For a cluster of embeddings, the data management platform may obtain the respective chunks for one or more of the embeddings of the cluster. The data management platform may provide the chunks to a machine learning model. The data management platform receives, from the machine learning model, a theme for the chunks (and therefore of the cluster), optionally a description that characterizes the cluster, and optionally a set of suggested queries with which to prompt a machine learning model regarding the cluster. A user may subsequently prompt a machine learning model with one of the suggested queries and receive, in response, a query response that represents an attempt by the machine learning model to respond to the query based on documents in the dataset. In some cases, the query may include an identifier for a cluster, e.g., a theme identifier, and the response may be based on documents in the dataset that include a chunk of the cluster. The machine learning model may use a semantic index for the dataset to process the query.

The techniques may provide one or more technical advantages that facilitate one or more practical applications. Existing data management platforms for interacting with datasets may have datasets that include semantic indexes built on top of supported data source systems and permit querying of the datasets. A user that queries on such a dataset may be an administrator user seeking insights. In e-discovery and exploration scenarios, the user faces a challenge of not knowing where to start or even what to query on this dataset. Matches and subsequent summarized answers depend to a great extent on the question asked, however. The techniques may provide high level easily navigable themes on what constitutes a dataset, provide the relationship/taxonomy of the data that is embedded, and/or provide prompting recommendations. This hierarchical organization of themes improves the efficiency of data exploration by reducing the computational resources needed to identify relevant information. When a user navigates through the hierarchical structure, the system only needs to process a subset of the total data, which improves efficiency when handling the voluminous datasets described herein.

Users may leverage prompting recommendations with a query to cause a machine learning model to further process the dataset to generate a query result that is, in this way, based on the described techniques for dataset clustering and AI-assisted theme generation. Absent the techniques, the number of documents in a dataset can be too large for any meaningful exploration, leaving the users without a clear place to start and requiring many additional queries to develop a context for subsequent, targeted querying.

The techniques may provide advantages over conventional keyword extraction approaches, which are effectively equivalent to extractive summarization. When processing large datasets (GBs or larger), keyword extraction requires coming up with intelligent ways to map-reduce not just the scaling dimension but also the accuracy dimension of the keyword extraction algorithm, which is non-trivial, easily convoluted, and thus less effective than the clustering and AI-assisted theme extraction approach techniques described herein. In addition, themes extracted using keyword extraction do not provide a taxonomy natively and their perceived quality is lower compared to the described techniques.

The techniques may thereby improve one or more of the technical fields of data processing, management, querying, AI prompt engineering, data insight generation, and navigation. Specifically, the hierarchical clustering approach enables more efficient data processing by reducing the computational complexity of searching large datasets, as the system can traverse the cluster hierarchy to quickly locate relevant information rather than performing exhaustive searches. This improved efficiency in data processing and querying is directly enabled by the technical implementation of the cluster hierarchy described herein.

In an example, a method comprises: computing, by a data management platform, chunk embeddings for respective chunks obtained from a dataset; storing, by the data management platform, the chunk embeddings at one or more vector database instances; generating, by the data management platform, based on the chunk embeddings, a cluster hierarchy having a plurality of clusters, each cluster of the plurality of clusters including one or more of the chunk embeddings; generating, by the data management platform, using a machine learning model, a theme for a cluster of the plurality of clusters, the theme generated by the machine learning model based on respective chunks of the one or more of the chunk embeddings included in the cluster; and storing, by the data management platform, a tag for each chunk embedding stored in the one or more vector database instances, wherein each tag identifies a cluster associated with the respective chunk embedding and is for use in filtering the chunk embeddings in response to queries.

In an example, a computing system comprises: processing means configured to: compute chunk embeddings for respective chunks obtained from a dataset; store the chunk embeddings at one or more vector database instances; generate based on the chunk embeddings, a cluster hierarchy having a plurality of clusters, each cluster of the plurality of clusters including one or more of the chunk embeddings; generate, using a machine learning model, a theme for a cluster of the plurality of clusters, the theme generated by the machine learning model based on respective chunks of the one or more of the chunk embeddings included in the cluster; and store a tag for each chunk embedding stored in the one or more vector database instances, wherein each tag identifies a cluster associated with the respective chunk embedding and is for use in filtering the chunk embeddings in response to queries.

In an example, one or more computer-readable media comprise instructions that, when executed by processing means, cause the processing means to perform a method comprising: computing, by a data management platform, chunk embeddings for respective chunks obtained from a dataset; storing, by the data management platform, the chunk embeddings at one or more vector database instances; generating, by the data management platform, based on the chunk embeddings, a cluster hierarchy having a plurality of clusters, each cluster of the plurality of clusters including one or more of the chunk embeddings; generating, by the data management platform, using a machine learning model, a theme for a cluster of the plurality of clusters, the theme generated by the machine learning model based on respective chunks of the one or more of the chunk embeddings included in the cluster; and storing, by the data management platform, a tag for each chunk embedding stored in the one or more vector database instances, wherein each tag identifies a cluster associated with the respective chunk embedding and is for use in filtering the chunk embeddings in response to queries.

The details of one or more examples of the invention are set forth in the accompanying drawings and the description below. Other features, objects, and advantages of the invention will be apparent from the description and drawings, and from the claims.

### BRIEF DESCRIPTION OF THE DRAWINGS

FIG. 1 is a block diagram illustrating an example system for data management, in accordance with techniques of the present disclosure.
FIG. 2 is a block diagram illustrating an example data management platform, in accordance with techniques of this disclosure.
FIG. 3 is a block diagram illustrating an example of a computing system that implements a data management platform, in accordance with techniques of this disclosure.
FIG. 4 is a block diagram illustrating a workflow of actions performed by an AI agent using tools, in accordance with techniques of this disclosure.
FIG. 5 is a flowchart illustrating an example mode of operation of a computing system, in accordance with one or more techniques of this disclosure.
FIG. 6 is a diagram illustrating hierarchical clusters of themes represented in a dataset, generated in accordance with one or more techniques of this disclosure.
FIGS. 7A-7C are diagrams illustrating a graphical user interface in accordance with one or more techniques of this disclosure.
FIG. 8 is a conceptual diagram illustrating an example mode of operation for a system for data management, in accordance with techniques of the present disclosure.
FIG. 9 is a block diagram illustrating data structures and relationships, in accordance with techniques of the present disclosure.
FIGS. 10A-10B are a flowchart illustrating an example mode of operation for a data management platform, in accordance with one or more techniques of this disclosure.
FIG. 11 is a table showing a cluster hierarchy with one cluster and a set of sub-clusters.
FIG. 12 is a table showing example results from different approaches to theme extraction.

Like reference characters denote like elements throughout the text and figures.

### DETAILED DESCRIPTION

Currently, no system or person has visibility into what themes are part of a certain backup snapshot and the themes' internal taxonomy. This means that the entire backup file is treated opaquely with regard to its contents for all use cases on it. This is particularly limiting for use cases that require "Backup Content Search." Without such a theme-based catalog, even the users of a data platform are uncertain of its capabilities and scope.

Techniques are described for automatically mining content of a dataset and extracting the present themes along with their taxonomy (hierarchy). This allows for display in an easily understandable user interface. The dataset may be a backup snapshot's file data. The extracted themes may be tagged against each of the open files as metadata, which enriches the files' value in the data catalog.

A data management platform that implements such techniques generates value on multiple dimensions:
- Users have access to the themes and taxonomy of their created datasets. This gives them a starting point for exploratory analysis and a peak into the scope of that dataset.
- Users can apply a query-time filter to only query a certain theme for more targeted and refined answers.
- Since the extracted themes are now tagged on the original files as well, this information is present in the data catalog, which allows for any other application (both internal and external) to also leverage this information.

Accordingly, described herein is a data management platform that, in some examples, includes a visual data exploration capability that is facilitated by techniques for dataset clustering and artificial intelligence (AI)-assisted theme extraction. By providing users with a visual categorization of the themes across documents and files within a dataset, the visual data exploration capability of the data management platform brings new context to the data and suggests queries that help the user gain insights into datasets faster.

With traditional approaches, enterprises often struggle to gain insights across unstructured data and text. This challenge only grows as the amount of unstructured data increases. With unstructured data representing more than 80 percent of all corporate data, companies are often forced to run queries and compile reports based on a small subset of data-the information stored in structured systems. As a result, reports and analyses may be incomplete or inaccurate, with valuable insight still locked inside disparate unstructured systems.

The data management platform brings the power of generative AI to enterprise data, dramatically improving the speed and quality of insights available for a variety of use cases. The data management platform may index and provide insight based on data stored in many popular formats, including documents such as PDFs, text files, image files, spreadsheets, HTML, XML, word processing files, and presentations. In this way, the data management platform may enable faster insights for the user with auto-generated themes and topics for thousands of documents.

In some examples, the data management platform may assist users with gaining instant visibility and deeper insight into data by providing more context about their information and smart prompts to derive specific results. With more context about the nature of their data from the star and a visual representation of the thematic structure of their data. In some examples, the data management platform uses topic modeling, a set of advanced AI techniques with natural language processing, to instantly identify hidden thematic structures across documents and files.

The data management platform may automatically provide a visual representation of the data sorted by themes (also referred to herein as "topics"). From there, users can click through each theme, ask conversational questions, and interact with intelligent, context-aware prompts to quickly find the most relevant information. In some examples, the data management platform visually maps a dataset based on semantic indexing and creates a list of suggested questions and queries. A user may interact with an AI agent (e.g., a conversational assistant or chatbot), and selection of one of the suggested questions may cause the AI agent to query a machine learning model to provide a query response based on the query parameters and the semantic index of the dataset. In some examples, the query response is based further on one or more topics associated with the suggested questions.

The data management platform may align with responsible AI commitments of the developer and/or user to ensure appropriate compliance.

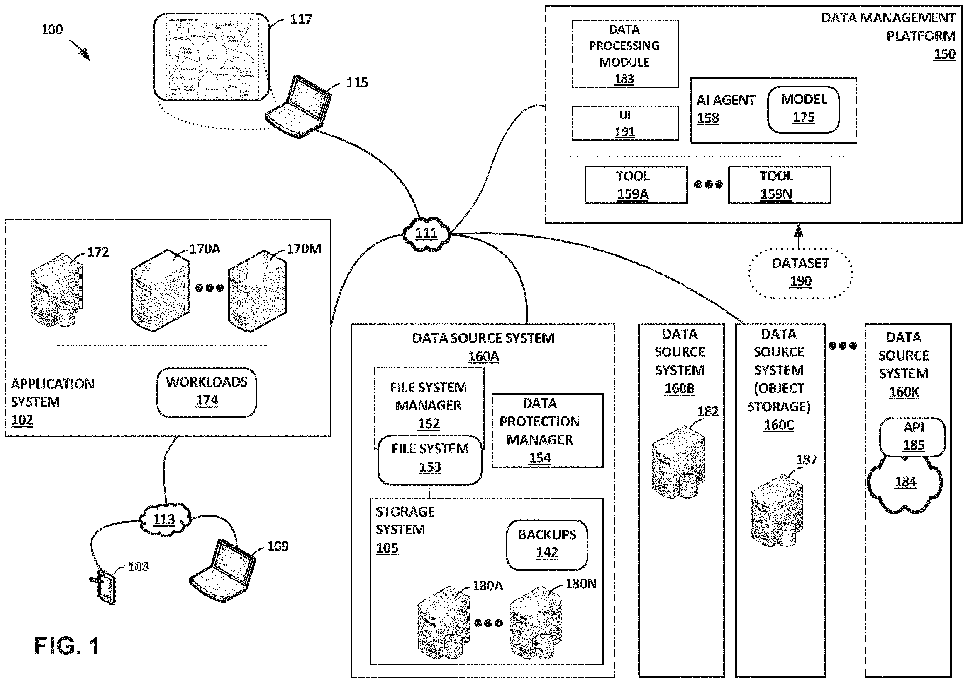

FIG. 1 is a block diagram illustrating an example system for data management, in accordance with one or more examples of the present disclosure. In the example of FIG. 1, system 100 includes application system 102. Application system 102 represents a collection of hardware devices, software components, and/or data stores that can be used to implement one or more applications or services provided to one or more mobile devices 108 and one or more client devices 109 via a network 113. Application system 102 may include one or more physical or virtual computing devices that execute workloads 174 for the applications or services. Workloads 174 may include one or more virtual machines, containers, Kubernetes pods each including one or more containers, bare metal processes, and/or other types of workloads. Application system 102 may be associated with an enterprise or other entity.

In the example of FIG. 1, application system 102 includes application servers 170A-170M (collectively, "application servers 170") connected via a network with database server 172 implementing a database. Other examples of application system 102 may include one or more load balancers, web servers, network devices such as switches or gateways, or other devices for implementing and delivering one or more applications or services to mobile devices 108 and client devices 109. Application system 102 may include one or more file servers. The one or more file servers may implement a primary file system for application system 102. (In such instances, file system 153 may be a secondary file system that provides backup, archive, and/or other services for the primary file system. Reference herein to a file system may include a primary file system or secondary file system, e.g., a primary file system for application system 102 or file system 153 operating as either a primary file system or a secondary file system.) Application system 102 may be located on premises and/or in one or more data centers, with each data center a part of a public, private, or hybrid cloud. The applications or services may be distributed applications. The applications or services may support enterprise software, financial software, office or other productivity software, data analysis software, end user relationship management, web services, educational software, database software, multimedia software, information technology, health care software, or other type of applications or services. The applications or services may be provided as a service (-aaS) for Software-aaS, Platform-aaS, Infrastructure-aaS, Data Storage-aas (dSaaS), or other type of service.

In some examples, application system 102 may represent an enterprise system that includes one or more workstations in the form of desktop computers, laptop computers, mobile devices, enterprise servers, network devices, and other hardware to support enterprise applications. Enterprise applications may include enterprise software, financial software, office or other productivity software, data analysis software, end user relationship management, web services, educational software, database software, multimedia software, information technology, health care software, or other type of applications. Enterprise applications may include applications that generate queries to AI agent 158, for which AI agent 158 responds. AI agent may respond to queries based on backup data stored at a storage system 105 of data source 160A, using services available at data source systems 160A-160K (collectively, "data source systems 160"), or using other data stored and available from data source systems 160. Enterprise applications may be delivered as a service from external cloud service providers or other providers, executed natively on application system 102, or both.

In the example of FIG. 1, system 100 includes a data source system 160A that provides a file system 153 and backup functions to an application system 102 using storage system 105. In some cases, data source 160A may use a separate, secondary storage system (not shown) to store backup data (e.g., backups 142). Data source system 160A implements a distributed file system 153 and a storage architecture to facilitate access by application system 102 to file system data and to facilitate the transfer of data between storage system 105 and application system 102 via network 111. With the distributed file system 153, data source system 160A enables devices of application system 102 to access file system data, via network 111 using a communication protocol, as if such file system data was stored locally (e.g., to a hard disk of a device of application system 102). Example communication protocols for accessing files and objects include Server Message Block (SMB), Network File System (NFS), or AMAZON Simple Storage Service (S3). File system 153 may be a primary file system or secondary file system for application system 102.

File system manager 152 represents a collection of hardware devices and software components that implements file system 153 for data source system 160A. Examples of file system functions provided by the file system manager 152 include storage space management including deduplication, file naming, directory management, metadata management, partitioning, and access control. File system manager 152 executes a communication protocol to facilitate access via network 111 by application system 102 to files and other objects stored to storage system 105.

Data source system 160A includes storage system 105 having one or more storage devices 180A-180N (collectively, "storage devices 180"). Storage devices 180 may represent one or more physical or virtual compute and/or storage devices that include or otherwise have access to storage media. Such storage media may include one or more of flash drives, solid state drives (SSDs), hard disk drives (HDDs), forms of electrically programmable memories (EPROM) or electrically erasable and programmable (EEPROM) memories, and/or other types of storage media used to support data source system 160A. Different storage devices of storage devices 180 may have a different mix of types of storage media. Each of storage devices 180 may include system memory. Each of storage devices 180 may be a storage server, a network-attached storage (NAS) device, or may represent disk storage for a compute device. Storage system 105 may include a redundant array of independent disks (RAID) system, Storage as a service (STaaS), Network Attached Storage (NAS), and/or a Storage rea Network (SAN). One or more storage devices 180 may be a storage cluster. In some examples, one or more of storage devices 180 are both compute and storage devices that execute software for data source system 160A, such as file system manager 152 and data protection manager 154 in the example of system 100, and store objects and metadata for data source system 160A to storage media. In some examples, separate compute devices (not shown) execute software for data source system 160A, such as file system manager 152 and data protection manager 154 in the example of system 100. Each of storage devices 180 may be considered and referred to as a "storage node" or simply as "node". In some examples, storage devices 180 may represent virtual machines running on a supported hypervisor, a cloud virtual machine, a physical rack server, or a compute model installed in a converged platform.

In some examples, data source system 160A may run on physical systems, virtually, or natively in the cloud. For instance, data source system 160A may be deployed to a physical cluster, a virtual cluster, or a cloud-based cluster running in a private cloud, on-prem, hybrid cloud, or a public cloud deployed by a cloud service provider. In some examples of system 100, multiple instances of data source system 160A may be deployed, and file system 153 may be replicated among the various instances. In some cases, data source system 160A includes a compute cluster that represents a single management domain. The number of storage devices 180 may be scaled to meet performance needs.

Data source system 160A may implement and offer multiple storage domains to one or more tenants or to segregate workloads 174 that require different data policies. A storage domain may be a data policy domain that determines policies for deduplication, compression, encryption, tiering, and other operations performed with respect to objects stored using the storage domain. In this way, data source system 160A may offer users the flexibility to choose global data policies or workload specific data policies. Data source system 160A may support partitioning.

A view may be a protocol export that resides within a storage domain. A view may inherit data policies from its storage domain, though additional data policies may be specified for the view. Views can be exported via SMB, NFS, S3, and/or another communication protocol. Policies that determine data processing and storage by data source system 160A may be assigned at the view level. A protection policy may specify a backup frequency and a retention policy.

Each of network 113 and network 111 may be the internet or may include or represent any public or private communications network or other network. For instance, each of network 113 and network 111 may be a cellular, Wi-Fi^{®}, ZigBee^{®}, Bluetooth^{®}, Near-Field Communication (NFC), satellite, enterprise, service provider, local area network, and/or other type of network enabling transfer of data between computing systems, servers, computing devices, and/or storage devices. One or more of such devices may transmit and receive data, commands, control signals, and/or other information across network 113 or network 111 using any suitable communication techniques. Each of network 113 or network 111 may include one or more network hubs, network switches, network routers, satellite dishes, or any other network equipment. Such network devices or components may be operatively inter-coupled, thereby providing for the exchange of information between computers, devices, or other components (e.g., between one or more client devices or systems and one or more computer/server/storage devices or systems). Each of the devices or systems illustrated in FIG. 1 may be operatively coupled to network 113 and/or network 111 using one or more network links. The links coupling such devices or systems to network 113 and/or network 111 may be Ethernet, Asynchronous Transfer Mode (ATM) or other types of network connections, and such connections may be wireless and/or wired connections. One or more of the devices or systems illustrated in FIG. 1 or otherwise on network 113 and/or network 111 may be in a remote location relative to one or more other illustrated devices or systems.

Application system 102, using file system 153 provided by data source system 160A, may generate objects and other data that file system manager 152 may create, manage, and cause to be stored to storage system 105. For this reason, application system 102 may alternatively be referred to as a "source system," and file system 153 for application system 102 may alternatively be referred to as a "source file system." In general, a source system for data protection purposes is any infrastructure or application for which data protection manager 154 performs data protection operations, such as backups, snapshots, replication, archival, or recovery. A source system may include not only those of application system 102, but may also or alternatively include a virtualization system, a cloud platform, database servers, file share, endpoints (e.g., servers or desktops), Software-aaS endpoints, or cluster. Data source systems 160 may or may not be a source system for data protection purposes. Data source systems 160 are sources of data for the dataset clustering and artificial intelligence (AI)-assisted theme extraction techniques described in this disclosure.

Application system 102 may for some purposes communicate directly with storage system 105 via network 111 to transfer objects, and for some purposes communicate with file system manager 152 via network 111 to obtain objects or metadata indirectly from storage system 105. File system manager 152 generates and stores metadata to storage system 105. The collection of data stored to storage system 105 and used to implement file system 153 is referred to herein as file system data. File system data may include the aforementioned metadata and objects. Metadata may include file system objects, tables, trees, or other data structures; metadata generated to support deduplication; or metadata to support snapshots. Objects that are stored may include files, virtual machines, databases, applications, pods, containers, any of workloads 154, system images, directory information, or other types of objects used by application system 102. These may also be referred to as "backup objects." Objects of different types and objects of a same type may be deduplicated with respect to one another. Such objects may also or alternatively be backed up as backup objects not as file system objects, but as independent objects such as virtual machines or databases.

Data source system 160A includes data protection manager 154 that may provide data protection operations for source systems. This may include applying data protection to file system data for file system 153; workloads 174; or programs and/or data of any of application servers 170, databases of database server 172, or other computing device of application system 102. In the example of system 100, data protection manager 154 backs up protected data of any one or more of the above to one or more backups 142 ("backups 142") stored by storage system 105. In some examples, a separate storage system (not shown) may store backups 142. The separate storage system may be deployed and managed by a cloud storage provider and referred to as a "cloud storage system." In some examples, the separate storage system is co-located with storage system 105 in a data center, on-prem, or in a private, public, or hybrid cloud. The separate storage system may be considered a "backup" or "secondary" storage system for storage system 105 when storage system 105 is a primary storage system. The separate storage system may be referred to as an "external target" for backups 142). Any of data source systems 160B-160K may be the separate, secondary storage system for data source system 160A.

Because storage system 105 is often more difficult or expensive to scale, data source system 160A may use a secondary storage system to support secondary data protection use cases such as backup, archive, mirroring, disaster recovery, and/or replication. In general, a file system backup is a copy of file system 153 to support protecting file system 153 for quick recovery, often due to some data loss in file system 153, and a file system archive ("archive") is a copy of file system 153 to support longer term retention and review. The "copy" of file system 153 may include only such data as is needed to restore or view file system 153 in its state at the time of the backup or archive. While the techniques of this disclosure are described with respect to retrieving backup data stored to storage system 105 or a secondary storage system, the techniques may be applied with respect to any data stored as a form of backup data to any storage system. For example, backup data can include archive data, replicated data, mirrored data, or snapshots. The techniques of this disclosure apply to data stored in primary or secondary storage systems.

Data protection manager 154 may back up source system data at any time in accordance with backup policies that specify, for example, backup periodicity and timing (daily, weekly, etc.). For example, data protection manager 154 may back up file system data for file system 153 at any time in accordance with backup policies that specify, for example, backup periodicity and timing, which file system data is to be backed up, storage location, access control, and so forth. A backup of file system data may correspond to a state of the file system data at a backup time. Backups 142 may thus represent time series data for file system 153 in that each backup stores a representation of file system 153 at a particular time. Similarly, data protection manager 154 may back up any of workloads 174, a database of database server 172, or other data from another protected item.

Because source system data changes over time due to creation of new objects, modification of existing objects, and deletion of objects, backups 142 will differ. For example, a backup may include a full backup of the file system 153 data or may include less than a full backup of the file system 153 data, in accordance with backup policies. For example, a given backup of backups 142 may include all objects of file system 153 or one or more selected objects of file system 153. A given backup of backups 142 may be a full backup or an incremental backup.

Backups 142 may be used to generate views and may be generated from snapshots. A current view generally corresponds to a (near) real-time backup state of the file system 153. A snapshot represents a backup state of a dataset, such as a file system, database(s), or virtual machine(s). In the context of FIG. 1, a snapshot represents a backup state of a protected item at a particular point in time. For example, a snapshot may provide a state of data of file system 153, which can be restored to the primary storage system 105 if needed. Similarly, a snapshot can be exposed to a non-production workload, or a clone of a snapshot can be created should a non-production workload need to write to the snapshot without interfering with the original snapshot. Similarly, a snapshot may provide a state of data of one of workloads 174 or a database of database server 172.

Thus, data protection manager 154 may use any of backups 142 to subsequently restore a protected item (or portion thereof), such as the file system, to its state at the backup creation time, or the backup may be used to create or present a new file system (or "view") based on the backup, for instance. Data protection manager 154 may deduplicate file system data included in a subsequent backup against file system data that is included in one or more previous backup. For example, a second object of file system 153 and included in a second backup may be deduplicated against a first object of file system 153 and included in a first, earlier backup.

Backup manager 154 may apply deduplication as part of a write process of writing (i.e., storing) an object of file system 153 to one of backups 142 in storage system 105. Additional description of an example deduplication process is found in U.S. Patent Application No. 18/183,659, filed 14 March 2023, and titled "Adaptive Deduplication of Data Chunks," which is incorporated by reference herein in its entirety. A user or application associated with application system 102 may have access (e.g., read or write), via data source system 160A or via data management platform 150, to backup data that is stored in a separate storage system.

System 100 also includes a data source system 160C that provides object storage capabilities to data management platform 150 and optionally to application system 102. Object storage is a data storage architecture designed for storing and managing large amounts of unstructured data, such as text files, images, videos, and in this case, chunk embeddings and associated chunk data (e.g. text). Unlike traditional file systems or block storage, object storage treats data as discrete units, or objects, each with a unique identifier and associated metadata. This architecture allows for highly scalable, distributed storage systems that can efficiently manage massive amounts of data.

Object storage system 160C may be implemented in various ways, including as a cloud-based service (as shown in FIG. 1) or deployed locally within the data management platform 150 infrastructure. When implemented as a cloud service, object storage system 160C may be provided by cloud service providers and accessed via standard APIs such as Amazon S3, Google Cloud Storage, or Microsoft Azure Blob Storage. In on-premises deployments, object storage system 160C may be implemented using software-defined storage solutions that provide similar functionality and interfaces.

Object storage system 160C may be particularly well-suited for the dataset clustering and AI-assisted theme extraction techniques described herein. Unlike vector databases, object storage system 160C offers efficient batch retrieval capabilities, allowing data management platform 150 to retrieve large sets of chunk embeddings and associated text for clustering operations. This capability is useful for the clustering algorithms that require access to the complete set of embeddings rather than just similarity-based queries. Additionally, object storage system 160C can scale to handle billions of objects without performance degradation, making it practical for processing large datasets.

In the context of the dataset clustering techniques, object storage system 160C may store chunk embeddings along with their corresponding chunk in a format that facilitates efficient batch retrieval. Each chunk and its embedding may be stored as a separate object with a unique identifier, typically derived from a hash of the chunk content. The object storage system 160C may organize these objects using a flat namespace or hierarchical structure, with dataset identifiers serving as prefixes or container names to maintain logical separation between different datasets. This organization enables data management platform 150 to efficiently retrieve all chunks belonging to a specific dataset for clustering operations, while also supporting granular access to individual chunks when needed.

Object storage system 160C may implement various data management features, including versioning, lifecycle policies, and access controls. These features allow data management platform 150 to manage the lifecycle of stored chunks and embeddings, potentially purging them after clustering operations are complete while maintaining the cluster metadata for future use. The access control mechanisms ensure that only authorized components of data management platform 150 can access the stored data, maintaining security and compliance with data protection requirements.

Data source systems 160 may contain a wealth of information for an enterprise, but backups 142 and other data from data source systems 160 may have high access latencies, being stored to slower storage mediums. In addition, in a modern, distributed architecture, it can be complex to collect, collate, and leverage data from workflows across an organization's data estate. Data source systems 160 may operate in a myriad of locations, spanning private data centers, single or multiple clouds, SaaS applications hosted by other organizations, and edge locations like stores, Internet- of-Things (IoT) devices, and many other applications. Conventional data platforms may store petabytes (or more) of data without classifying, indexing, or tracking it. This is often referred to as "dark data," and it's typically unknown to the organization and is often unstructured and/or difficult to access. The main challenge with dark data is that it represents a missed opportunity for organizations to gain insights and make informed decisions, and secure and protect data.

With advanced backup systems, backup data can be made readily available to be analyzed and used by machine learning / artificial intelligence applications to drive additional value for users and enterprises. Data management platform 150, and in particular data plane 221, may obtain source data from one or more data source systems 160, create indexes on the data, and use the indexes to generate insights into the data.

As used herein, a "dataset" may refer to data stored by or obtained from any of source systems 160 ("source system data") (or other source of data), an index generated based on the source system data, or a combination of the source system data and the index. For example, dataset 190 includes data from one or more of data source systems 160 and, once indexed by data management platform 150, may include the index. (Although shown in FIG. 1 as transmitted from systems 160 to data management platform 150 as a whole, dataset 190 is typically streamed or otherwise sent in portions for processing due to its typically large size.) Dataset 190 may include any data, including file system data, archive data, backup data (e.g., backups 142), backup snapshots of file system data, cloud storage data, etc. Dataset 190 may include documents.

U.S. Patent Application 18/618,695 filed 27 March 2024 and titled "DATA RETRIEVAL USING EMBEDDINGS FOR DATA IN BACKUP SYSTEMS," which is incorporated by reference herein in its entirety, describes retrieval augmented generation in which a data platform extracts data in the form of text from a data source, creates indexes on the data, and uses the indexes to generate insights into the data.

Indexing is a process used in machine learning and information retrieval to efficiently store, search, and retrieve items like documents or images that have been represented as vectors (e.g., embeddings). When dealing with a large dataset of documents, vector indexing allows for quick similarity searches, often based on cosine similarity or other distance measures between vectors. Vector indexing often operates on vectors that have been generated through a semantic embedding process. For example, data management platform 150 may generate embeddings for chunks using a model like BERT, which captures semantic meanings, and then a vector index is built to store those embeddings for fast retrieval. Semantic indexing focuses on the meaning and relationships between documents, chunks, or other data, and refers to indexing based on the semantic (i.e., meaning-based) similarity between documents, chunks, or other data. Semantic indexing may involve Latent Semantic Indexing (LSI) or using deep learning models (e.g., BERT, GPT) to capture the meaning of words, phrases, or entire documents in vector form. Semantic indexing facilitates retrieval of documents that are semantically related to a query, rather than just matching keywords. As used herein, "index" or "indexing" may refer to vector indexing, semantic indexing, or any combination thereof.

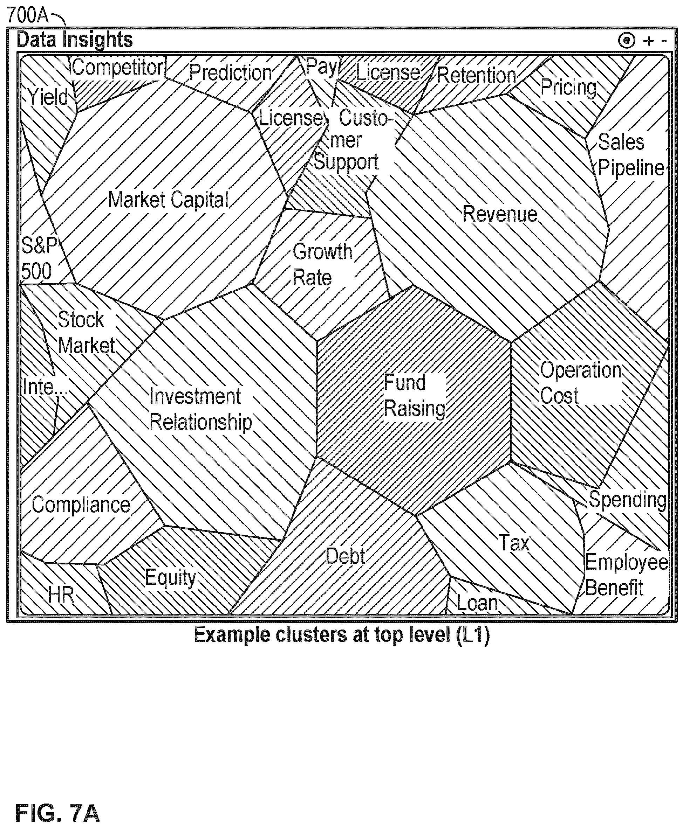

Data management platform 150 may provide centralized data management for data associated with a user. The user can be an organization, tenant, human person, enterprise, or human agent thereof, for instance. User interface module 191 of data management platform 150 may generate user interfaces for output and display via user devices, such as user device 115, that access data management platform 150 via network 111. In the example of FIG. 1, user interface module 191 generates and outputs, for display at user device 115, user interface 117. User interface 117 may represent or include any of the user interface elements depicted by FIGS. 7A-7C, for instance. User device 115 may be a computing device, smartphone, desktop, laptop, console, video conferencing system, or other device that communicates with data management platform 150 via network 111 and includes a display device for display user interfaces generated by data management platform 150. In some examples, user device 115 is a device of data management platform 150 or, put another way, a user can interact directly with data management platform 150 rather than via a network.

Data associated with a user and managed by data management platform 150 can be spread across multiple heterogenous data source systems 160. Data source systems 160 may make data accessible to data management platform 150 via network 111. In some examples, to access the data, data management platform 150 leverages tools 159A-159N (collectively, "tools 159"). Each of data source systems 160 may represent a different type of data source such that the different data source systems are heterogenous and accessed using different tools 159 and protocol and may provide data according to different data types and formats. For example, data source systems 160 can each provide the data in a different format, according to different access protocols or interfaces, are dynamic or static, and otherwise differ in their accessibility to data management platform 150 such that they are heterogenous.

Data source systems 160 can be dynamic or static. Dynamic data source systems are those that store, provide, or otherwise make accessible data that is rapidly changing. These can include machine generated data streams or real-time data feeds, for example. Example dynamic data sources may include application programming interface (API) endpoints or Software as a service (SaaS) application endpoints-such as are illustrated by API 185 for a cloud service 184, machine log data, message bus streams, a relational database-such as is illustrated by database system 182, key/value stores, pub/sub service systems, etc. Static data source systems are those that store, provide, or otherwise make accessible data that changes or updates at a slower rate. Example static source systems include backup sources such as data source system 160A, vectorized context repositories such as are described in U.S. Patent Application 18/618,695, archive systems, etc.

Tools 159 may be functions that AI agent 158 invokes to access or manage data stored by or made accessible from data source systems 160. Tools 159 may be implemented as independent software applications, which may execute directly on data management platform 150 co-located with AI agent 158, or which may execute on one or more external systems. One or more of tools 159 may be third-party applications specially developed to access corresponding ones of data source systems 160.

Each of tools 159 may implement a northbound interface that can be invoked by AI agent 158 for machine-to-machine communication. Each tool of tools 159 is capable of interacting with a corresponding one of data source systems 160 to execute requests received at the northbound interface of the tool. To interact with data source systems 160 to access or manage data or access metadata for the data, tools 159 may implement one or more communication protocols.

Although shown and described as leveraging tools 159 for obtaining source system data from any of data source system 160, data management platform 150 may obtain source system data in other way, i.e., without use of such tools 159. The dataset clustering and artificial intelligence (AI)-assisted theme extraction techniques described herein may be applied with respect to source system data obtained in any way by data management platform 150. In addition, the techniques may be applied with respect to any live/primary data or secondary data.

AI agent 158 receives, e.g., from user device 115, an input indicative of a query. A query can include text, for instance. The query may be a request that data management platform 150 perform, on behalf of the user of user device 115, a task with respect to data associated with a user and stored by any one or more data source systems 160. Satisfying the task may require that data management platform 150 perform multiple actions on behalf of the user of user device 115. For example, a query may be a request to optimize backups 142, perform a security operation, configure one or more data source systems 160, migrate data from data source system 160A to data source system 160B, generate an analysis or operational insight for data stored at data source system 160A and data source system 160B, perform an administrative task, etc. The query can be a natural language query. (References herein to security-related tasks are to be understood as a form of data management.)

In some cases, requested tasks can be or include tasks typically available using a graphical user interface (GUI) or command-line interface (CLI) of data management platform 150 (e.g., user interface module 191). Data management platform 150 may implement APIs, according to an API specification, that can be accessed and invoked to perform data management tasks.

AI agent 158 includes or interacts with a machine learning model 175 that is based on artificial intelligence or other machine learning techniques. For example, machine learning model 175 may include or use Word2Vec or Global Vectors for Word Representation (GloVe), BERT, Doc2Vec, Recurrent Neural Networks (RNNs)-such as Long Short-Term Memory (LSTM) or Gated Recurrent Unit (GRU) architectures, transformer models, Convolutional Neural Networks (CNNs), Graph Neural Networks (GNNs), autoencoders, Gradient Boosting Machines (GBMs), Deep Neural Networks (DNN), or other artificial neural networks.

Machine learning model 175 may be a large language model (LLM). Machine learning model 175 may be a service executing at a computing system separate from data management platform 150. Machine learning model 175 may be executed a computing system local for data management platform 150. Machine learning model 175 may be trained on action-based outcomes to be more in tune with actions that need to be performed in a data management and security solution. Such training may involve fine-tuning a third-party LLM to be able to quickly perform data management- and security-related tasks.

A machine learning system, in some examples separate from data management platform 150 but in some examples part of or executed by data management platform 150, may be used to train machine learning model 175 for AI agent 158. The machine learning system may be executed by a computing system. For example, the machine learning system may apply one or more of nearest neighbor, naïve Bayes, decision trees, linear regression, support vector machines, neural networks, k-Means clustering, Q-learning, temporal difference, deep adversarial networks, or other supervised, unsupervised, semi-supervised, or reinforcement learning algorithms to train the machine learning model.

In some examples, data management platform 150 may use machine learning model 175 to perform indexing of data source system data. In some examples, a specially trained machine learning model performs indexing, while a separate machine learning model (e.g., an LLM) operates as the basis for AI agent 158 to perform conversational AI, generate insights from an index of data source system data, and generate themes from clusters (as described in further detail below).

AI agent 158 may also be referred to as an AI assistant, a chat agent, a chatbot, a virtual assistant, or a conversational interface.

In some examples, which are now described, AI agent 158 performs a task based on the query by leveraging tools 159 to complete tasks involving one or more source systems 160 to satisfy the query. Performing a task may include generating and outputting a response to the user. AI agent 158 can perform multiple tasks for multiple different queries. In some examples, AI agent 158 ingests an API specification for APIs implemented by data management platform 150 to perform operations typically available to the user via an interface. In such examples, AI agent 158 applying model 175 to a query can invoke the APIs of data management platform 150 to perform a requested task.

Each of tools 159 may extend the capability of AI agent 158 to intelligently access data in a different source system, e.g., by implementing additional protocol(s) and formulating requests that the AI agent 158, and more specifically model 175, is trained to leverage in order to autonomously (or semi-autonomously) act on behalf of the user to satisfy user queries.

In some examples, data management platform 150 may configure tools 159 to use the role-based access privileges of a user. Consequently, AI agent 158 leveraging a tool 159 inherits the user's privileges and is thus able to interact with a data source system 160 accessed by the tool as though it is the user interacting directly with the data source system. AI agent 158 is extensible to incorporate additional tools 159.

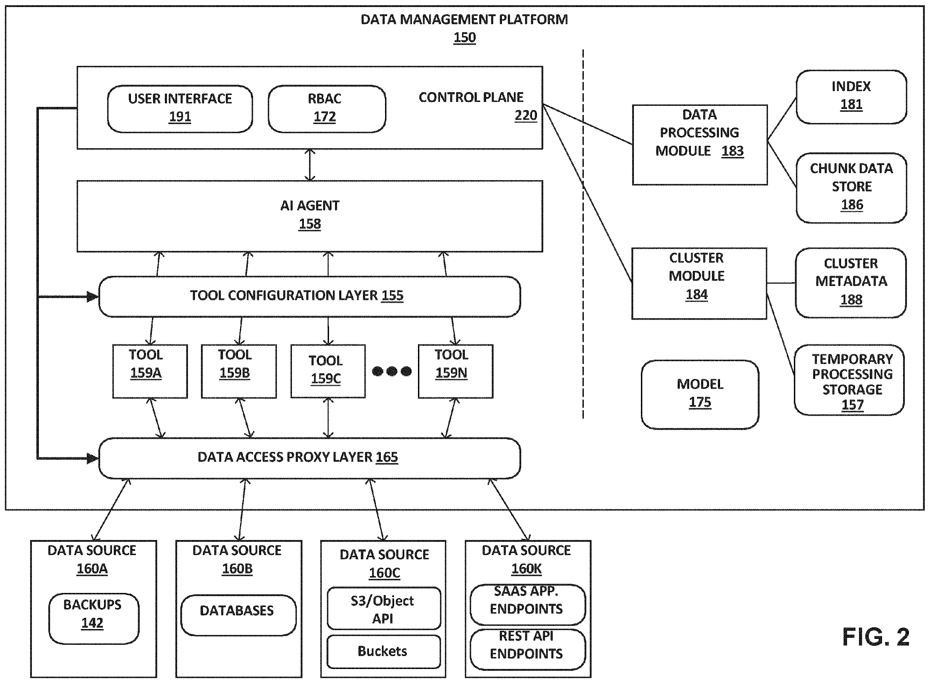

Each of tools 159 is configured for use by AI agent 158 by configuring the tool to access a corresponding one of data source system 160 and by enabling AI agent 158 to use the tool. Such configuration may be performed by a user and may involve the user specifying the particular tools of tools 159 that AI agent 158 is to use with respect to data associated with the user, specifying how AI agent 158 is to connect to tools 159, what types of calls tools 159 are able to make, and how tools 159 can authenticate and authorize against data source systems 160. Tools 159 configuration is described in further detail with respect to FIG. 2.

Based on a query, AI agent 158 may select one or more tools of tools 159 that it can use to perform a task acting autonomously or semi autonomously on behalf of the user associated with the query. Privileged roles across selected tools are accounted for and passed through such that if AI agent 158 is acting (semi-)autonomously on behalf of a user, AI agent 158 is acting as if it is the user with respect to source systems 160 access by the selected tools.

As an example, consider a case in which backups 142 include backups for data stored by data source system 160B. If a query requests to optimize backups for data stored by data source system 160B, AI agent 158 may select and use tool 159A to interface with data source system 160A to obtain historical data describing backups 142 regarding, e.g., scope, timing, applied policies, sizes, etc. AI agent 158 may select and use tool 159B to interface with data source system 160B to obtain data describing database system 182. Based on the historical data describing previous backups 142 and the data describing database system 182, AI agent 158 can interact, via tool 159A, with data source system 160A to optimize backup settings for future backups of database system 182.

Role(s) for the user that issued the query, on data source systems 160, constrain the actions that can be taken by AI agent 158 with respect to the data source systems, as well as the data that can be accessed by AI agent 158 and made available to the user in a response to a query. Continuing the above example, privileges of the role for the user with respect to data source system 160A determine whether and in what manner AI agent 158 can configure data source system 160B to optimize backup settings for future backups of database system 182.

In some examples, if a user does not have sufficient privileges to perform an action with respect to one of data source systems 160, AI agent 158 may not perform the action. This limitation facilitates the secure access by users.

In some examples, AI agent 158 may obtain, process, and generate insights from datasets with or without using tools 159.

In accordance with techniques for one or more aspects of this disclosure, data management platform 150 applies dataset clustering and artificial intelligence (AI)-assisted theme extraction to a dataset 190. For example, data management platform 150 may apply a clustering algorithm to recursively cluster the embeddings of the index for dataset 190 and thereby identify a hierarchy of clusters of embeddings representative of chunks, and thereby of associated documents, within dataset 190. For a cluster of embeddings, data management platform 150 may obtain the respective chunks of text for one or more of the embeddings of the cluster. Data management platform 150 may provide the chunks to model 175. Data management platform 150 receives, from model 175, a theme for the chunks (and therefore of the cluster), optionally a description that characterizes the cluster, and optionally a set of suggested queries with which to subsequently prompt model 175 regarding the cluster.

A user using user device 115 may subsequently prompt a model 175 with one of the suggested queries and receive, in response, a query response that represents an attempt by model 175 to respond to the query based on documents in dataset 190. In some cases, the query may include an identifier for a cluster, e.g., a theme identifier, and the response may be based on documents in dataset 190 that include a chunk of the cluster. Model 175 may use the index for dataset 190 to process the query.

The above techniques will now be described in further detail and with respect to additional figures in this disclosure.

Data management platform 150 requests dataset 190 from one or more data source systems 160, which transmits data for dataset 190 via network 111 to data management platform 150. Data processing module 183 generates an index for dataset 190, as described above.

Data processing module 183 processes documents included in dataset 190 to generate one or more chunks for each document. A document may be a collection of text, which may be human-readable. Each chunk for a document may include text and may be one or more words, phrases, or other group of text included in the document. Text for a chunk will typically be contiguous text within the document.

Chunks may comprise various types of data beyond text. For example, chunks may include:
- Image chunks: visual elements, regions of interest, or entire images within documents
- Metadata chunks: structured information such as document properties, timestamps, author information, or classification tags
- Structured data chunks: database records, JSON objects, XML elements, table rows, or configuration parameters
- Multimedia chunks: audio segments, video frames, or multimedia annotations
- Mixed-content chunks: combinations of different data types that are e.g. semantically related

The type of chunk may influence the embedding generation process, with different embedding models or techniques applied based on the data type to ensure meaningful vector representations in a common embedding space. Each document can include one or more chunks.

Data processing module 183 generates an embedding for each chunk using embedding techniques appropriate to the chunk's data type. The chunk embeddings may be semantic embeddings, as described above, and data processing module 183 may use a semantic indexing process similar to that described above to generate the embeddings. Example algorithms that may be implemented by data processing module 183 to generate chunk embeddings include bag of words, Term Frequency-Inverse Document Frequency (TD-IDF), Word2Vec, GloVe, FastText, Doc2Vec, application of transformer-based models (e.g., BERT, GPT, or RoBERTa), Sentence-BERT, Universal Sentence Encoder (USE), T5, or InferSent. For image chunks, example algorithms include convolutional neural networks (CNNs), vision transformers (ViTs), ResNet, or CLIP. For structured data chunks, example techniques include entity embeddings, graph neural networks, or specialized structured data embedding models. For multimedia chunks, multimodal embedding techniques that can process multiple data types simultaneously may be employed. The embedding generation process enables chunks of different data types to be represented in a compatible vector space that enables meaningful clustering and similarity comparisons.

Data management platform 150 applies a clustering algorithm to the chunk embeddings to identify a hierarchy of clusters of embeddings representative of chunks. Data management platform 150 may apply the clustering algorithm recursively to identify, for each cluster at a particular level of the hierarchy, a set of lower-level clusters within the cluster. Reference herein to performing or applying a clustering algorithm recursively or iteratively refers to repeatedly performing a "run" or "instance" or "call" of the primary clustering algorithm function that receives, as input, a set of data and returns a plurality of clusters of the set of data.

The clustering algorithm causes embeddings to be organized into a hierarchical data structure that enables efficient traversal and retrieval operations. This hierarchical structure may be implemented using a tree-like organization where each node represents a cluster and contains references to its sub-clusters. The technical implementation of this structure may allow for navigation from higher-level clusters to more specific sub-clusters without needing to recompute embeddings or re-evaluate cluster assignments. This approach reduces the computational complexity of locating relevant information in large datasets, as the system can navigate directly to the appropriate branch of the hierarchy rather than evaluating all data points. The cluster hierarchy data structure may be persisted to storage in a manner that preserves the parent-child relationships between clusters while maintaining efficient access to the underlying chunk data.

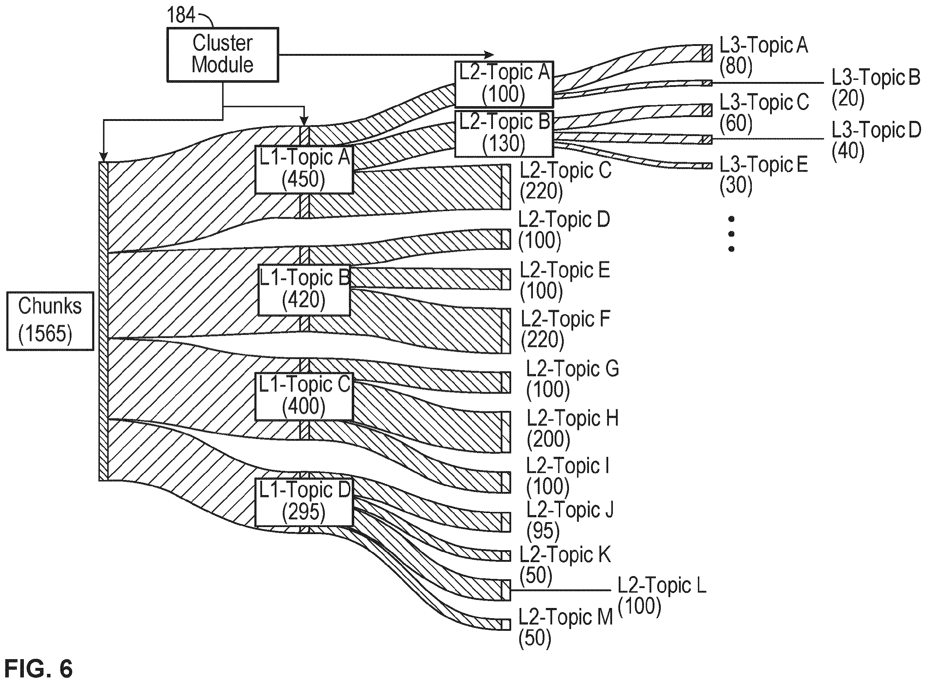

FIG. 6 is a Sankey diagram that illustrates clustering of chunks into a hierarchy of clusters. (Cluster module 184 is described in detail with respect to FIG. 2 and is an example module for performing clustering for data management platform 150.) In FIG. 6, data processing module 183 has generated 1,565 chunks from dataset 190 and generated embeddings for each of the chunks. Cluster module 184 applies a clustering algorithm to the chunks, and more specifically to the chunk embeddings, to generate clusters of chunks. The clustering algorithm may be, for instance, k-Means, Hierarchical clustering, Density-Based Spatial Clustering of Applications with Noise, Gaussian Mixture Models, Mean Shift, Affinity Propagation, Spectral Clustering, Agglomerative Clustering, application of one or more machine learning modules, etc., or some combination of the above. The clustering algorithm may generate the clusters based on spatial similarities among the chunk embeddings.

In FIG. 6, cluster module 184 has generated 4 L1-Topic clusters of the 1,565 chunks: L1-Topic A, L1-Topic B, L1-Topic C, and L1-Topic D. Each of the L1-Topic clusters has an associated number of chunks within the cluster. For instance, L1-Topic B has 420 chunks. Cluster module 184 may generate any number of clusters for any number of chunks. The number of clusters may be affected by the clustering algorithm, the similarity of the chunks across the dataset, or input parameters (e.g., number of clusters to generate), for example. The L1-Topic clusters are at Level 1 of an overall hierarchy of clusters for the 1,565 chunks of the dataset and, by extension, the documents included in the dataset. Additionally, cluster parameters for the clustering algorithm may affect accuracy to facilitate contextually similar documents / chunks being clustered together. The parameters that define these may include one or more of the following:
- Text Parsing - ability to extract meaningful text from files
- Embedding Model - Model used to generate embeddings for the text chunks
- Clustering algorithm
- Hyper parameters for the overall system - These are parameters at various stages, e.g., chunk size, number of clusters, prompt templates for LLM, etc.

Cluster module 184 may apply the clustering algorithm to the chunks included in each of the L1-Topic clusters to further cluster these chunks at a more fine-grained, detailed semantic level. As shown, cluster module 184 has generated 3 L2-Topic clusters of the 450 chunks of L1-Topic A: L2-Topic A, L2-Topic B, and L2-Topic C. Each of the L2-Topic clusters has an associated number of chunks within the cluster. For instance, L2-Topic C has 220 chunks.

Cluster module 184 may apply the clustering algorithm (or is directed by another module to do so) recursively in this fashion until a terminal level for the hierarchy is reached. This terminal level corresponding to the number of levels of the cluster hierarchy may be, e.g., configurable for data management platform 150, input by a user, or determined dynamically based on characteristics of the dataset (e.g., degree of semantic similarity).

For each of the clusters, data management platform 150 selects one or more of the chunks assigned to the cluster. Selection of chunks may be random or according to some heuristic or other selection algorithm. (It may not be possible to use all chunks because of token limitations of model 175.) Data management platform 150 issues a query to model 175 with the selected chunks to request a theme for the selected chunks. The query may include a natural language request, such as "Process this list of text items [chunk0, chunk1, ... , chunkN] and generate a common theme for the text items." Model 175 provides a query response, which data management platform 150 receives. The query response includes a theme for the selected chunks. The theme may be expressed as one or more words and describes a common theme for the chunks. Example themes are depicted in the charts of FIGS. 7A-7C.

In some examples, the query (or a subsequent query) may include a request for a description of the chunks. The query response by model 175 includes the requested description, which may include an "external description" for display to a user and a more extensive "internal description" for future use in the subsequent queries.

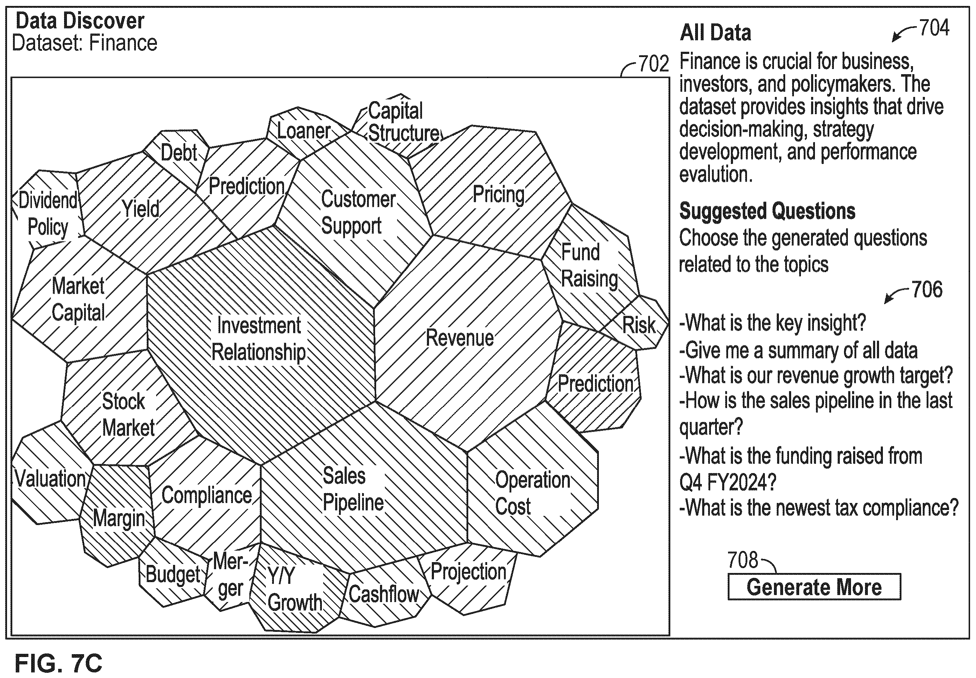

In some examples, the query (or a subsequent query) may include a request for a suggested queries (or "questions") for the theme. The query response by model 175 includes the requested one or more suggested queries. FIG. 7C depicts questions 706 displayed on a user interface alongside a set of themes generated for a finance dataset and displayed on the user interface in chart 702. Text 704 may represent a theme description for a highest-level node in the hierarchy. In other examples, "Finance" may be the theme for a cluster at any level of the cluster hierarchy, and the clusters/themes of chart 702 are sub-clusters/themes of the chunks assigned to the "Finance" cluster.

An example cluster hierarchy is shown in FIG. 6. Model 175 having generated (or "extracted") the themes for each cluster at each level of the cluster hierarchy, user interface module 191 of data platform module generates user interfaces for display at a display device, such as the display of user device 115. User interface module ("UI") 191 may be or include a process, a web server, or a service, for instance. User interface module 191 may display the cluster hierarchy in a "drillable" manner, in which the user may interact with UI elements representing themes at a level of the hierarchy to "drill down" into a theme to the next level down.

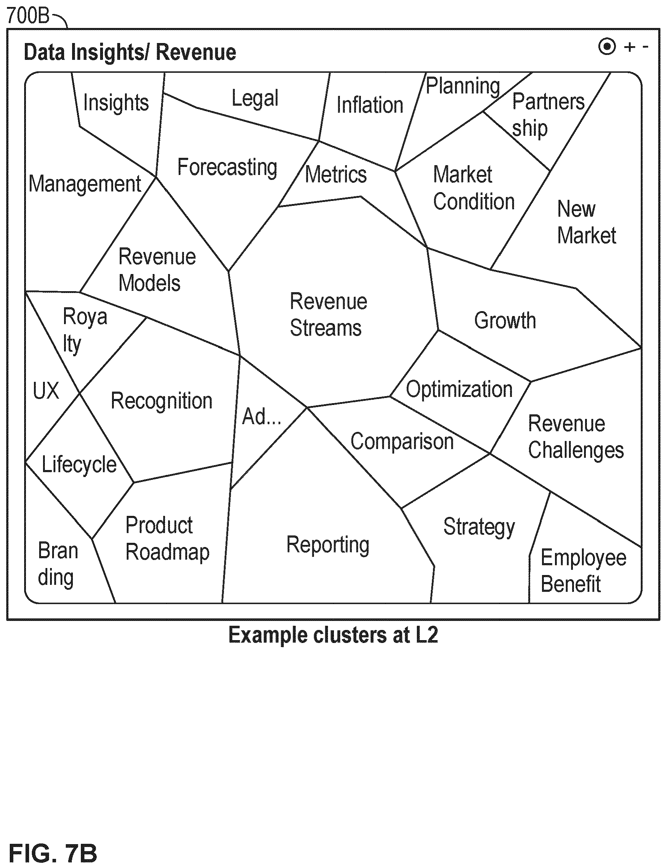

For example, FIG. 7A depicts an interactive chart 700A showing themes at level 1 (top level) of a cluster hierarchy. Upon receiving an indication of user input selecting the "Revenue" theme, user interface module 191 updates the chart to show themes at level 2 of the cluster hierarchy that are sub-themes of the "Revenue" theme. This is shown as chart 700B in FIG. 7B. FIGS. 7A-7B thus depict interaction by a user with a hierarchical chart used to display the cluster/theme hierarchy. The sub-themes of a theme correspond to clusters generated from a higher-level cluster. With respect to FIG. 6 for instance, L2-Topic D, L2-Topic E, and L2-Topic F are sub-themes of L1-Topic B. Other examples of hierarchical charts include tree diagrams, mind maps, Sankey diagrams, a treemap, a sunburst chart, etc. Charts 700A-700B can be included in user interfaces generated by user interface module 191 and output for display, e.g., at user device 115.

As already described above, FIG. 7C depicts suggested queries 706 for interrogating a dataset. The user may request new suggested queries by selecting UI element 708. In response to receiving an indication of user input selecting one of queries 706, AI agent 158 provides the selected query to model 175. Model 175 processes the query using the index for the dataset and provides a query response, which AI agent 158 may output, e.g., for display, to an output file, to another device, etc. AI agent 158 and user interface module 191 may be a common service or program of data management platform 150 in some examples.

In addition, or alternatively, to using suggested queries, data management platform 150 may process custom queries which are user-provided queries that are not pre-suggested. When a user submits a custom query, for instance through user interface 191, data management platform 150 may implement a query-theme association process to connect the user query with relevant themes in the cluster hierarchy. This process may involve several steps to ensure efficient and accurate data retrieval based on the user's query intent.

The query-theme association process may begin with semantic analysis of the user-provided query. Data processing module 183 may generate an embedding for the query text using the same embedding algorithm applied to generate chunk embeddings, ensuring vector space compatibility. This query embedding may then be compared against theme representations in the cluster hierarchy using a similarity computation algorithm. The similarity computation may use cosine similarity or Euclidean distance measures to identify themes most semantically aligned with the query embedding.

Data management platform 150 may implement a multi-stage retrieval process for user-provided queries. In the first stage, the system may identify candidate themes by computing similarity scores between the query embedding and representative embeddings for each theme. These representative embeddings may be derived from cluster centroids or from aggregated chunk embeddings within each cluster. The system may then apply a threshold-based filtering mechanism to select themes exceeding a minimum similarity threshold, which may be dynamically adjusted based on dataset characteristics and query specificity.

For traversing the cluster hierarchy in response to user-provided queries, data management platform 150 may implement an efficient navigation algorithm that prioritizes themes with highest semantic similarity to the query. The traversal algorithm may employ a beam search approach that maintains a priority queue of candidate themes ranked by similarity score, enabling the system to explore the most promising branches of the hierarchy first. This approach optimizes computational resources by focusing on clusters most likely to contain relevant information while avoiding exhaustive traversal of the entire hierarchy.

To handle ambiguous user queries that may relate to multiple themes, data management platform 150 may implement a disambiguation mechanism that identifies and presents multiple relevant theme paths in the cluster hierarchy. The system may generate confidence scores for each potential theme match and present ranked results to the user. This implementation enables efficient navigation of the cluster hierarchy even when the user's query does not precisely match any single theme.

Data management platform 150 may, as described above, provide high level, easily navigable themes on what constitutes a dataset, provide the relationship/taxonomy of the data that is embedded, and/or provide prompting recommendations. Users may leverage these prompting recommendations with a query to cause model 175 to further process the dataset to generate a query result that is, in this way, based on the described techniques for dataset clustering and AI-assisted theme generation. As a result, the techniques implemented in aspects of data management platform 150 may thereby improve one or more of the technical fields of data processing, data management, data querying, data insight generation, AI prompt engineering, and data navigation.

The hierarchical clustering approach implemented by data management platform 150 directly enables more efficient data processing by reducing the search space for information retrieval operations. A user and / or the data management platform 150 may traverse the cluster hierarchy and provide a targeted query for information related to a specific theme. In this way, the user and / or data management platform 150 does not need to scan the entire dataset for an answer to a query. This technical approach reduces the computational complexity, which directly translates to decreased processing time and lower resource utilization, particularly for large datasets where exhaustive searches would be prohibitively expensive. Additionally, the ability to generate theme-specific suggested queries further optimizes processing by directing queries to the most relevant portions of the dataset, reducing unnecessary data evaluation.

FIG. 2 is a block diagram illustrating example data management platform 150, in accordance with one or more examples of this disclosure. Data management platform 150 includes control plane 220 implementing user interface 191 and role-based access control (RBAC) 172, AI agent 158, tool configuration layer 155, tools 159, and data access proxy layer 165. Control plane 220 exchanges communications with user devices and controls the operation of other data management platform 150 components. Control plane 220 may configure tools 159 based in part on RBAC 172, and control plane 220 may facilitate access to data source systems 160 via data access proxy layer 165. Tool configuration is an optional feature for data management platforms according to the described techniques.

Control plane 220 may offer the following, e.g., via user interface 191 or an API (not shown) with default in parentheses where given.
1) Config: num levels of topics to generate (5), num levels of topics to show (2), num question suggestions to generate (3)
2) Set default LLM: LLMId
3) Start clustering: Internal API
   a) Input: DatasetId, num levels to cluster
4) Get Clusters for a dataset:
   a) Input: Dataset Id, optional: regionId, (topic level, topic name), num questions to generate(n), return detailed description
   b) Output:
   c) Map[RegionId]: List<TopicDetail>
      i) TopicDetail: Topic Name, topic Level, external topic description, detailed topic description, suggested questions
   d) Generate suggested questions:
      i) Input: DatasetId, Topic Name, Topic Level, num questions to generate(n), prev suggested questions list

RBAC 172 specifies privileges or permissions for users of data management platform 172 according to user roles. Roles may represent different job functions or responsibilities within an organization. For example, roles could be "manager," "employee," "administrator," etc. Permissions are actions that users assigned a role are allowed to perform within different data source systems 160. For example, permissions could include "read," "write," "delete," the ability to configure select services or functions within a data source system, and so forth. RBAC 172 enhances security by ensuring that users only have access to the resources and data that are necessary for their roles, reducing the risk of unauthorized access and data breaches. RBAC 172 may improve compliance with regulatory requirements by providing a structured approach to access control and auditing.

User interface module 191 ("user interface 191") generates and outputs, for display at user devices, user interfaces by which data management platform 150 can, e.g., receive user inputs, including prompts for AI agent 158, and output responses based on responses generated by AI agent 158, the output responses including, in some cases, graphical depictions of the hierarchy of extracted clusters as shown in FIGS. 7A-7C.

Tools 159 are functions that can be invoked ("called") by AI agent 158. To accomplish a task based on a query, AI agent 158 requires access to the appropriate tools 159 with which to accomplish the task, and AI agent 158 must be trained with descriptive information for the tools and/or have access to descriptive information for the tools to enable AI agent 158 to select and use tools 159 to perform actions to accomplish the task. Tools 159 are the means by which AI agent 158 can access other sources of data, leverage protocols for such access, formulate calls to the data source systems 160, and can filter the returned data.

To train AI agent 158 (and more specifically, model 175) to use tools 159, AI agent 158 may obtain and digest configuration information in the form of specifications for a tool describing the actions that the tool is capable of performing. Such specifications can include API specifications, user or administrative manuals, or websites, for instance. AI agent 158 may also be trained with training data generated from previous tasks accomplished by users of data management platform 150. Such training data may include records of user interaction via user interface 191, commands issued by control plane 220 to any of data source systems 160, a description of data received, or other data that has an association between a desired task to accomplish and the results of that task.

The instruction sets (actions) that can be performed by tools 159, and then the data structures on how to form those particular calls to perform those calls are configured via tool configuration layer 155. AI agent 158 via tool configuration layer 155 interacts with tools 159, and by extension data source systems 160, primarily using available calls. RBAC 172 may then be applied to those actions. For example, there may be an action to create a backup job. Based on RBAC 172, more fine-grained action privileges may be applied for a user query, based on the user, to that particular action of creating the backup job. For instance, the user (and therefore AI agent 158) may be able to create backup job involving a first set of objects in a data source system, but the user does not have permission to create a backup job involving a second set of objects in the data source system. AI agent 158 therefore must be trained or otherwise have access to the actions that can be performed as well as the privileges / permissions of users in order to security and successfully generate the appropriate calls to perform actions to accomplish a task based on a query.

Tool configuration layer 155 enables for an individual user to specify which of tools 159 AI agent 158 can use on behalf of the user, specify how AI agent 158 is to connect to the tools, specify the types of calls selected tools 159 are able to make to data source systems 160, and how selected tools 159 can authenticate and authorize against data source systems 160. Different areas of configuration for each tool may include the following, with corresponding configuration information:
1) Tool Application / Data source - define the target application for the tool to interact with, such as any of data source systems 160. Examples applications may include workflow management applications, data management applications, SaaS applications, database management tools, data protection systems, and others.
2) Tool Access Method - Specify the manner in which the tool will access data from the data source system. Examples may include APIs, GraphQL, Open Database Connectivity (ODBC), and others.
3) Tool Calls Methods - Specify the scope of calls to the target application / data source system. Some examples of scope are: GET, PUT, POST, DELETE, SELECT, INSERT, UPDATE, DELETE, DROP, etc. These scopes may be associated with the access method protocols.
4) Tool Authentication / Authorization - Specify a method and details for authenticating AI agent 158 against the target application / data source system. Example details may include credentials for the user in the form of a user-provided API Key, a credentials file, a username and a password, etc., as well as an authentication protocol, such as OAuth, OpenID Connect, Security Assertion Markup Language, Kerberos, or Lightweight Directory Access Protocol.
5) Tool Description - A verbose description on what the tool is used for and the types, semantics, syntax, and / or description of data that the tool will return.
6) Tool Name - A unique name for the tool to be referenced by AI agent 158.

Each of the above may be configured by a user using user interface 191. In some cases, an administrator / operator for data management platform 150 may use user interface 191 to define and configure tools 159 through tool configuration layer 155.

Data access proxy layer 165 may enable tools 159 configured through tool configuration layer 155 to access data source systems 160 accordingly. In order for a tool of tools 159 to connect with its configured data source system of data source systems 160, the tool may have to authenticate to the data source system and check the authorization of the user's access to the data, which in accordance with various techniques of this disclosure is obtained from RBAC 172 based on a role of the user that has made a query to AI agent 158. Data access proxy layer 165 may constrain the actions that can be performed with respect to data source systems 160 as well as the data from data source systems 160 that is visible. Because data management platform 150 understands how to interact with data source systems 160 and has an indication of the identity of the user, data access proxy layer 165 can broker the permissions and access levels between tools 159 accessing data source systems 160, the data, and the user. Data management platform 150 may receive an indication of the identity of the user through a login process.

To accomplish authentication / authorization, when a tool / data source system is registered with data management platform 150, the configuration state for that data access path is stored to data access proxy layer 165. For example, if the service is a RESTful API endpoint, the user should pre-configure the state with an access token or allow for the user to passthrough the user's session access token.

Some of tools 159 may be set up to access registered storage systems (e.g., data source systems for which data protection is being applied by data management platform 150). In such cases, the authentication method / protocol for accessing the data can be the same as the source registration or it can be provided by the user via a passthrough method.

Data access proxy layer 165 may receive an indication of the user (i.e., the requestor for the query), obtain from control plane 220 the user's role for the selected data source systems 160, obtain authentication details for the corresponding tools 159, and obtain or generate an appropriate authentication mechanism for the usage of each of the corresponding tools. Because some of tools 159 may be stateless, data access proxy layer 165 may perform these operations each time a tool is invoked on behalf of the user.

Once the method of access and authentication has been delivered to a tool of tools 159, the tool can then execute its given action(s) to further the task according to an execution plan devised by AI agent 158.

AI agent 158, in the example of FIG. 2, is a top-level agent. AI agent 158 interacts with the end user (or "requestor"). AI agent 158 will generate a response for a given input query by the user. In examples of data management platform 150 that leverage tools 159, AI agent 158 selects, from available tools 159 for the user, the one or more tools needed to complete a given task. AI agent 158 will invoke the selected one or more tools needed to satisfy the input query.

Data management platform 150 in this way provides a solution that enables AI agent 158 to interact not only with the backup system and its data sources, but also with other systems the backup system is connected to or interacts with by leveraging the information data management platform 150 has regarding those systems, so as to act on behalf of a user that issues a query.

AI agent 158 can interact, using tools 159, with data source systems 160 to interact with and optimize interactions with those data source systems. Allowing the AI agent 158 to be able to interact with those external sources, separate from the backup system, in an autonomous manner, whether it be to perform a task to exchange data or configuration information, to help optimize the configuration, or to backup and ensure security of the data. Interacting with data source systems 160 allows AI agent 158 to understand the configuration and state of those systems, which in turn enables AI agent 158 to be able to interact with, optimize and configure those environments autonomously or semi-autonomously on behalf of a user.

AI agent 158 can execute multiple calls to data source systems 160 to accomplish tasks based on queries. In other words, AI agent 158 can multithread the information retrieval and action calling. AI agent 158 may be able to reason on a real-time data feed and simultaneously execute actions to accomplish tasks. AI agent 158 may be to reason across all configured tools 159 simultaneously, select multiple actions to achieve a task, and execute the multiple actions concurrently with respect to some data. In addition, data source systems 160 can output data to data management platform 150 in a variety of formats. In some examples, AI agent 158 does not need to maintain the schema of the data received; AI agent 158 can translate incoming data schemas into useful information for AI agent 158 to be able to perform a next action.

Data received from any of data sources 160 may be made available to model 175 to drive RAG queries, and other such AI/ML application usage. RAG is a framework that combines pre-trained sequence-to-sequence (seq2seq) models with a dense retrieval mechanism, allowing for the generation of more informed and contextually relevant output. This allows users and applications to retrieve data in a secure and efficient manner, without compromising the integrity of the system or the data itself. The RAG queries are also tailored to the specific data types identified by the machine learning analysis, ensuring that users and applications can quickly and easily access the desired information.

In the era of artificial intelligence, off-the-shelf trained large language models (LLMs) have emerged as a powerful tool for generating human-like responses in various applications. However, most existing knowledge-grounded conversation models rely on out of date materials that could be individual documents related to the topic of a conversation, limiting LLMs' ability to generate diverse and knowledgeable responses that could involve more proprietary or domain-specific. To overcome this challenge, the concept of RAG has been introduced, which combines the strengths of LLMs with the ability to retrieve information from multiple documents. RAG not only enables LLMs to generate more knowledgeable, diverse, and relevant responses but also offers a more efficient approach to fine-tuning these models. By using RAG to determine what to respond with and fine-tuning to guide how to respond, LLMs can deliver a more engaging and informative conversational experience.

AI agent 158 executing a workflow to accomplish a task may use RAG to leverage data in any of data sources 160 and incorporate (or enable) 'AI Ready' for RAG-assisted large language models (LLMs). The data may be secured through RBAC 172. By leveraging RAG on top of an enterprise's own dataset, a user may not need to perform costly fine-tuning or initial training to teach the Language Models (e.g., model 175) how to accomplish a given task. Leveraging RAG provides the most recent and relevant context to any query. This approach may also enable responses that are based on any point in time for dynamic data in data source systems 160.

As noted above with respect to FIG. 1, use of tools 159 is optional for data management platform 150, and data management platform 150 may obtain data for a dataset in a variety of ways.

Data management platform 150 also includes data processing module 183. Data processing module 183 performs indexing of a dataset to generate index 181. Data processing module 183 stores index 181 to a storage device. As described above, data processing module 183 processes a dataset to generate chunks and compute chunk embeddings for the chunks. Data processing module 183 stores each of the chunks (i.e., the chunk text) in association with its corresponding chunk embedding to chunk data store 186 (shown in FIG. 2). Chunk data store 186 may be a vector database and represent or include a data structure stored to a storage device. The data structure may be a list, table, or database, for instance.

The following data structures may be used in chunk data store 186 to characterize chunks and associate chunks with documents and their corresponding embeddings:

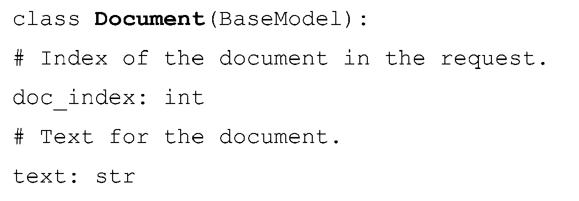

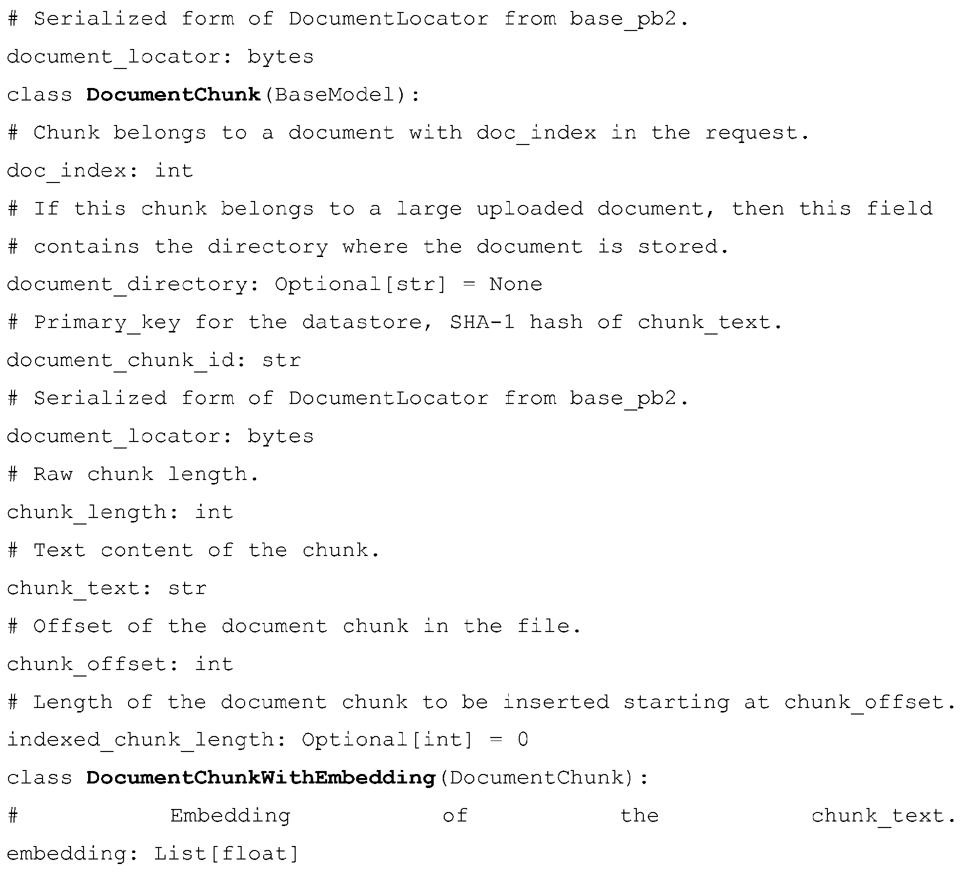

Chunk data store 186 thus stores, for each chunk, the chunk hash (e.g., SHA-1), chunk text, a corresponding embedding, and optionally other fields.

In some examples, chunk data store 186 may lack at least one of: the ability to perform clustering processes directly on data in the chunk data store 186, pagination capabilities, efficient batch retrieval capabilities for large datasets, scalability beyond approximately 50 million embeddings, and generally the computational resources needed to process the entirety of the embedding space simultaneously for hierarchical clustering operations.

For this reason, data processing module 183 may also store each of the chunks (i.e., the chunk text), in association with its corresponding chunk embedding, in data source 160C (i.e. object storage). As described above, this object storage 160C serves as a specialized data source system for storing and retrieving chunk embeddings and associated text for clustering. Object storage 160C provides scalable, distributed storage that efficiently handles the large volumes of embedding data generated during dataset processing.

Unlike vector databases such as those that may be used to implement chunk data store 186, which excel at similarity searches but are limited in their ability to return complete datasets, object storage 160C supports efficient batch retrieval operations for clustering. This capability allows data management platform 150 to access the entire embedding space for a dataset, which is useful for the clustering algorithms implemented by cluster module 184. Object storage 160C can scale to millions, '00s of millions and even billions of objects without performance degradation, addressing the capacity limitations that typical vector databases encounter when storing more than approximately 50 million embeddings.

Even when a vector database may allow for retrieval of the entire set of chunk embeddings, storage in object storage 160C may still have advantages. For instance, vector databases are optimized for similarity searches but often do not have the computational operations required for clustering algorithms. By storing embeddings in object storage 160C in addition to chunk data store 186, data management platform 150 achieves a separation of functionalities that optimizes system performance: chunk data store 186 remains dedicated to high-performance semantic querying, while object storage 160C handles the bulk data retrieval needed for clustering operations. This dual-storage architecture also improves availability, as users can immediately perform semantic searches through chunk data store 186 while the more computationally intensive clustering process executes asynchronously using data from object storage 160C. Additionally, this approach reduces the processing load on chunk data store 186, preserving its query performance even during clustering operations that might otherwise consume significant database resources. The technical implementation effectively decouples the querying functionality from the clustering functionality, allowing each to be optimized independently.

The data management platform 150 may implement a distributed architecture for chunk data store 186 that spans multiple vector database instances. For datasets containing billions of embeddings, the data management platform 186 may create multiple instances of the vector store and implement load balancing between them. This architecture enables the data management platform 150 to scale beyond a single vector database instance while maintaining a unified interface. When a query is issued, it may be automatically routed to the appropriate vector database instance(s), and the results may be combined before being returned to the requesting component. From the perspective of other components in data management platform 150, chunk data store 186 appears as a single logical database, despite being physically distributed across multiple instances. This technical approach enables the system to handle datasets of virtually any size while maintaining query performance.

Data management platform 150 may also include temporary processing storage 157, which provides local scratch space for processing operations. Temporary processing storage 157 may represent volatile or non-volatile storage media configured to temporarily store chunk embeddings and associated text retrieved from object storage 160C for high-speed access during computationally intensive clustering operations.

When dataset sizes exceed the capacity of a single chunk data store 186 (i.e. vector database instance), data management platform 150 may implement a load balancing mechanism to distribute embeddings across multiple chunk data stores / vector database instances while maintaining a unified interface for queries. This distributed architecture may employ a consistent hashing algorithm to determine which vector database instance stores each embedding, ensuring even distribution and minimizing redistribution when scaling the system. A routing layer within data processing module 183 intercepts queries to chunk data store 186 and transparently directs them to the appropriate vector database instance based on the embedding's hash value. For similarity searches, the routing layer may execute parallel queries across all instances and merge the results based on similarity scores, applying a distributed top-k algorithm to ensure that results are identical to what would be returned from a single, larger instance. This architecture may enable horizontal scaling to support datasets containing billions of embeddings while presenting a single logical vector database to the rest of the system, particularly to AI agent 158 and user interface module 191, which remain unaware of the underlying distribution.
Control plane 220 invokes cluster module 184 to apply a clustering algorithm to chunk embeddings and obtain themes for the clusters, as described above with respect to FIG. 1. Cluster module 184 retrieves chunk embeddings and associated text from object storage 160C and loads them into the temporary processing storage 157. This transfer is performed because clustering algorithms typically require efficient access to the complete set of embeddings, which may not be efficiently retrieved from vector databases through pagination. The cluster module 184 may orchestrate the transfer of chunk embeddings from object storage 160C to temporary processing storage 157 using parallel download operations to optimize transfer speeds. Once loaded into temporary processing storage 157, the embeddings can be accessed with significantly lower latency than would be possible through direct API calls to object storage 160C, enabling the clustering algorithms to perform rapid distance calculations, centroid computations, and cluster assignments.

For very large datasets, cluster module 184 may implement a distributed approach to clustering that operates across multiple processing nodes. In this configuration, different portions of the embedding data from object storage 160C may be downloaded to the temporary processing storage 157 of different nodes. Each node processes its assigned portion of the data, and the results are combined to create the complete cluster hierarchy. This distributed approach enables the system to efficiently process datasets that would be too large for a single node to handle in memory, while still maintaining the quality of the clustering results.

Cluster module 184 persists cluster and theme metadata to cluster metadata 188. Cluster and theme metadata may include one or more of, for each cluster, the dataset, the cluster level, the cluster name or theme or topic, internal description, external description, the number of chunks in the cluster, and suggested queries / questions for the cluster. Cluster metadata 188 may represent or include a data structure stored to a storage device. The data structure may be a list, table, or database, for instance.

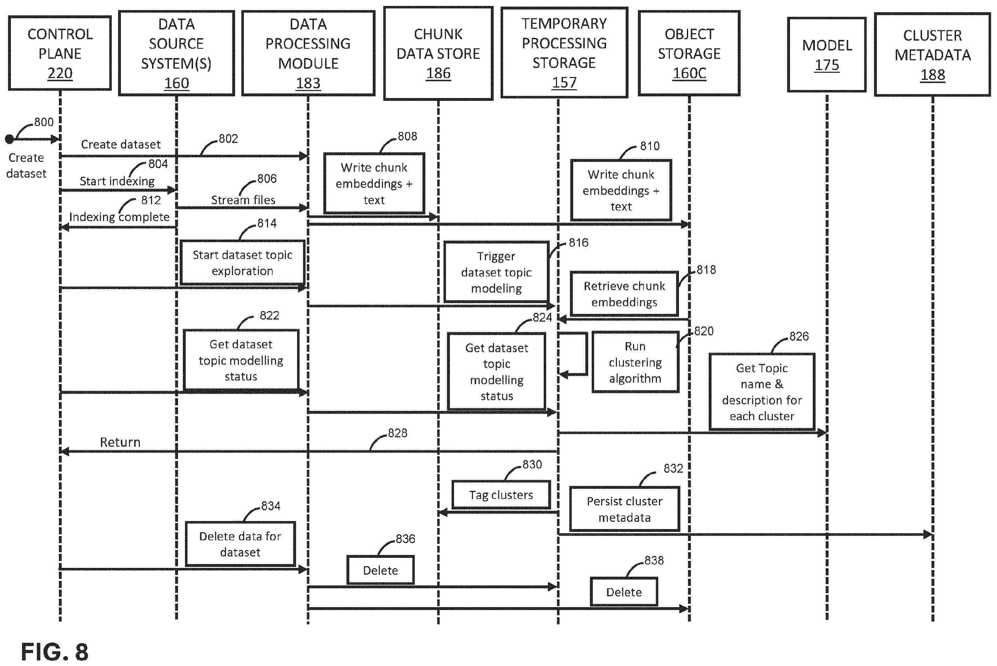

After cluster metadata has been generated and persisted to cluster metadata 188, the data in temporary processing storage 157 may be purged to free resources for subsequent operations. This is useful for large datasets that exceed the processing capacity of standard in-memory operations, allowing the system to efficiently process datasets containing millions or billions of embeddings. The corresponding data in object storage 160C may also be deleted to conserve storage resources, as the essential cluster relationships have been captured in the cluster metadata. This process is described further below with respect to FIG. 8.

At each level of a cluster hierarchy, the expectation may be to generate 10 - 20 clusters which will have a topic name for each cluster, an external facing summarized description (to be displayed in UI), an internal description used for generating questions, and the count of embeddings / chunks that map to the cluster ("cluster count"). However, any number of clusters may be generated. The number of levels of a cluster will typically be between 2 and 5, but can be any positive integer. A single cluster hierarchy may be stored in cluster metadata 188 using a data structure generated using the following code (the data structure is apparent from the code):

```
 create table if not exists dataset_themes (
       account_id varchar(64) not null,
       tenant_id varchar(64) not null,
       dataset_id text not null,
       cluster_level int not null,
       cluster_name text not null,
       external_desc text,
       internal_desc text,
       num_chunks bigint,
       Suggested_questions text[],
       created_at timestamp with timezone DEFAULT now(),
       updated_at timestamp with timezone DEFAULT now(),
       primary key (account_id, tenant_id, dataset_id, cluster_level));
```

Each row or entry of the above data structure is for one theme / cluster. Tenant_id identifies a user or organization, dataset_id identifies a dataset, cluster_level is the cluster level, cluster_name is the theme, external_dese is an external description of the cluster, internal_dese is an internal description of the cluster, num_chunks is the number of chunks assigned to the cluster by the clustering algorithm ("cluster count"), and Suggested_questions is a list of one or more suggested questions.

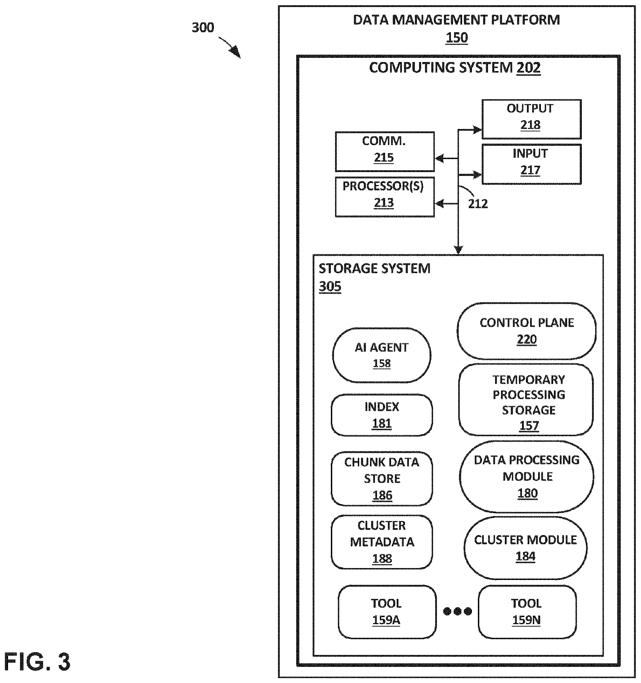

FIG. 3 is a block diagram illustrating an example of a computing system that implements data management platform 150, in accordance with techniques of this disclosure. Computing system 202 may be implemented as any suitable computing system, such as one or more server computers, workstations, mainframes, appliances, cloud computing systems, and/or other computing systems that may be capable of performing operations and/or functions described in accordance with one or more aspects of the present disclosure. In some examples, computing system 202 may represent a cloud computing system, server farm, and/or server cluster (or portion thereof) that provides services to other devices or systems. In other examples, computing system 202 may represent or be implemented through one or more virtualized compute instances (e.g., virtual machines, containers) of a cloud computing system, server farm, data center, and/or server cluster.

In the example of FIG. 3, computing system 202 may include one or more communication units 215, one or more input devices 217, one or more output devices 218, and one or more storage devices of storage system 305. Storage system 305 includes AI agent 158 and in this example includes tools 159, each of which are software modules in this example. However, any one or more of tools 159 may execute on different systems. Storage system 305 also includes control plane 220, data processing module 183, cluster module 184, and temporary processing storage 157. Storage system 305 is configured to store data and metadata for chunk data store 186 and cluster metadata 188. One or more of the devices, modules, storage areas, or other components of computing system 202 may be interconnected to enable inter-component communications (physically, communicatively, and/or operatively). In some examples, such connectivity may be provided by through communication channels (e.g., communication channels 212), which may represent one or more of a system bus, a network connection, an inter-process communication data structure, or any other method for communicating data.

The computing system 302 comprises processing means. In the example of FIG. 3, the processing means comprises one or more processors 213 configured to implement functionality and/or execute instructions associated with computing system 202 or associated with one or more modules illustrated herein and/or described below, including AI agent 158, tools 159, control plane 220, data processing module 183, and cluster module 184. One or more processors 213 may be, may be part of, and/or may include processing circuitry that performs operations in accordance with one or more examples of the present disclosure. Examples of processors 213 include microprocessors, application processors, display controllers, auxiliary processors, one or more sensor hubs, and any other hardware configured to function as a processor, a processing unit, or a processing device. Computing system 202 may use one or more processors 213 to perform operations in accordance with one or more examples of the present disclosure using software, hardware, firmware, or a mixture of hardware, software, and firmware residing in and/or executing at computing system 202.

One or more communication units 215 of computing system 202 may communicate with devices external to computing system 202 by transmitting and/or receiving data, and may operate, in some respects, as both an input device and an output device. In some examples, communication units 215 may communicate with other devices over a network. In other examples, communication units 215 may send and/or receive radio signals on a radio network such as a cellular radio network. In other examples, communication units 215 of computing system 202 may transmit and/or receive satellite signals on a satellite network. Examples of communication units 215 include a network interface card (e.g., such as an Ethernet card), an optical transceiver, a radio frequency transceiver, a GPS receiver, or any other type of device that can send and/or receive information. Other examples of communication units 215 may include devices capable of communicating over Bluetooth^{®}, GPS, NFC, ZigBee^{®}, and cellular networks (e.g., 3G, 4G, 5G), and Wi-Fi^{®} radios found in mobile devices as well as Universal Serial Bus (USB) controllers and the like. Such communications may adhere to, implement, or abide by appropriate protocols, including Transmission Control Protocol/Internet Protocol (TCP/IP), Ethernet, Bluetooth^{®}, NFC, or other technologies or protocols.

One or more input devices 217 may represent any input devices of computing system 202 not otherwise separately described herein. Input devices 217 may generate, receive, and/or process input. For example, one or more input devices 217 may generate or receive input from a network, a user input device, or any other type of device for detecting input from a human or machine.

One or more output devices 218 may represent any output devices of computing system 202 not otherwise separately described herein. Output devices 218 may generate, present, and/or process output. For example, one or more output devices 218 may generate, present, and/or process output in any form. Output devices 218 may include one or more USB interfaces, video and/or audio output interfaces, or any other type of device capable of generating tactile, audio, visual, video, electrical, or other output. Some devices may serve as both input and output devices. For example, a communication device may both send and receive data to and from other systems or devices over a network.

One or more storage devices of storage system 305 within computing system 202 may store information for processing during operation of computing system 202. Storage devices may store program instructions and/or data associated with one or more of the modules described in accordance with one or more examples of this disclosure. One or more processors 213 and one or more storage devices may provide an operating environment or platform for such modules, which may be implemented as software, but may in some examples include any combination of hardware, firmware, and software. One or more processors 213 may execute instructions and one or more storage devices of storage system 305 may store instructions and/or data of one or more modules. The combination of processors 213 and storage system 305 may retrieve, store, and/or execute the instructions and/or data of one or more applications, modules, or software. Processors 213 and/or storage devices of storage system 305 may also be operably coupled to one or more other software and/or hardware components, including, but not limited to, one or more of the components of computing system 202 and/or one or more devices or systems illustrated as being connected to computing system 202.

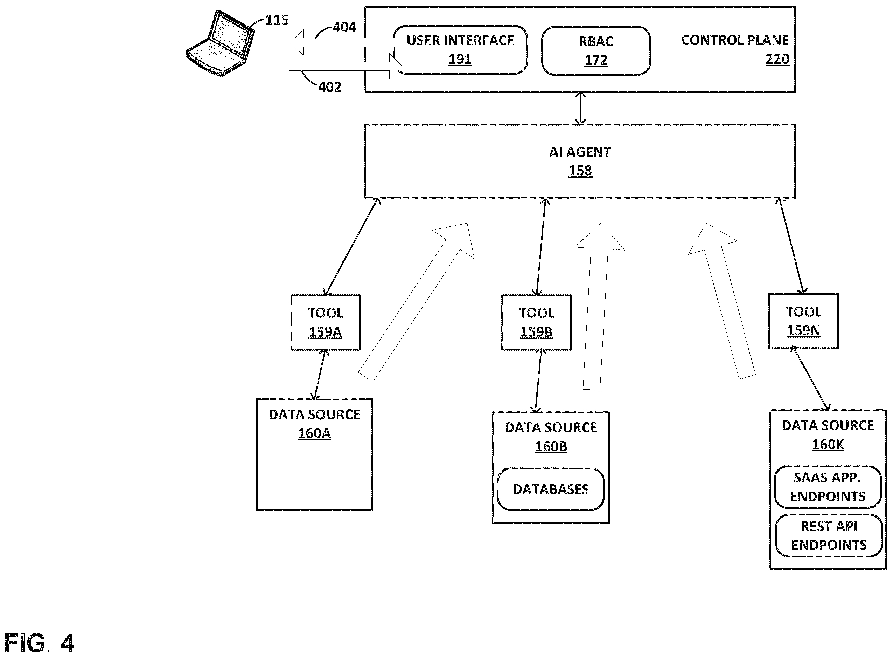

FIG. 4 is a block diagram illustrating a workflow of actions performed by AI agent 158 using tools 159. User interface 191 receives a query 402 from a user device 115. The query 402 is associated with a user. Based on query 402, AI agent 158 formulates an execution plan to accomplish a task to satisfy query 402. AI agent 158 generates the execution plan to include a set of actions that are performed using selected tools 159 to interact with corresponding data source systems 160 for the selected tools 159. AI agent 158 is configured / trained with action available via each of tools 159 and selects the appropriate one or more tools 159 based on permissions, according to RBAC 172, for the user associated with query 402.

The execution plan can be dynamic, i.e., rather than a static series of actions, some actions may depend on outcomes of prior actions. Moreover, AI agent 158 may change an execution plan as the execution plan is proceeding through the execution phase, based on data obtained from data source systems 160.

In FIG. 4, AI agent 158 executes the generated execution plan to obtain data from data source systems 160B and 160K using actions performed with tool 159B and 159N, respectively. This data determines actions performed with respect to data source system 160A using tool 159A. AI agent 158 generates and outputs a response 404, responsive to query 402, to user device 115.

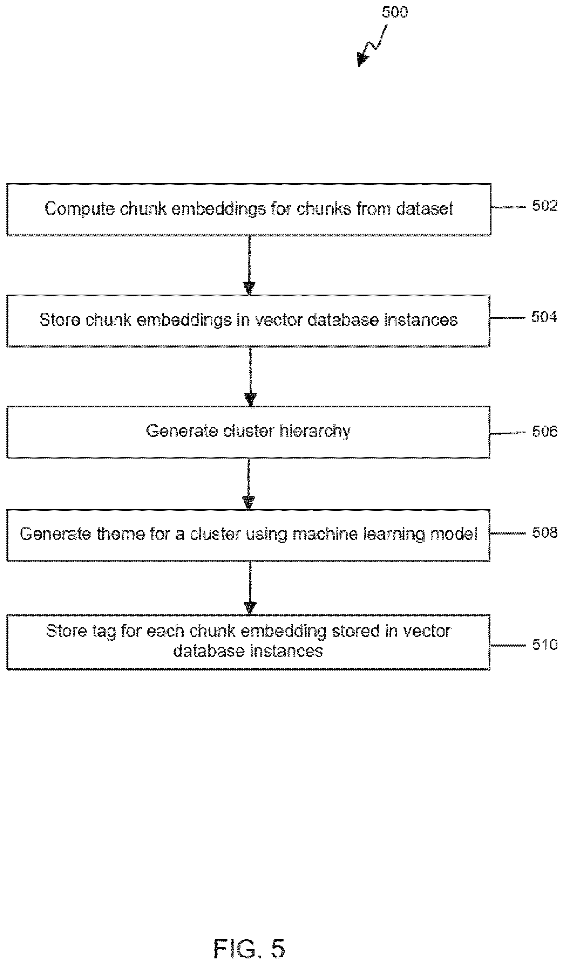

Having described the overall system architecture and components, FIG. 5 illustrates a detailed method 500 for dataset clustering and AI-assisted theme extraction that embodies the technical approach described above. This method demonstrates a data flow that enables the efficient processing of large-scale datasets through the dual-storage architecture and hierarchical clustering approach. The operations shown in FIG. 5 may be performed by a data management platform, such as data management platform described elsewhere herein.

At block 502, the data management platform computes chunk embeddings for respective chunks obtained from a dataset. Each chunk may comprise data from the dataset, including text, images, metadata, structured data, or other data types. The chunks may be generated by processing documents included in the dataset, where each document may contain various types of data elements. Each chunk for a document may include one or more data elements such as words, phrases, images, metadata fields, structured records, or other data components included in the document. For text chunks, the content will typically be contiguous text within the document. For non-text chunks, the content may represent discrete data elements such as image regions, metadata entries, or structured data records. Each document can include one or more chunks of potentially different data types.

At block 504, the data management platform stores the chunk embeddings in one or more vector database instances. The vector database instances may be implemented using technologies such as Milvus, which provide efficient storage and retrieval of vector embeddings. In addition to storing the chunk embeddings in the vector database instances, the data management platform may also store the chunk embeddings in object storage that is different from the one or more vector database instances. The object storage may be implemented using technologies such as Amazon S3, Microsoft Azure Blob Storage, or other cloud-based or on-premises object storage solutions. This dual storage approach may enable both efficient semantic querying through the vector database and complete dataset access for clustering operations through object storage. For instance, a user may begin semantic querying while clustering operations are performed.

At block 506, the data management platform generates, based on the chunk embeddings, a cluster hierarchy having a plurality of clusters. The clusters within the cluster hierarchy may be organized in multiple levels. In this hierarchy, clusters at a lower level are derived from clusters at a higher level. To generate the cluster hierarchy, the data management platform may receive the chunk embeddings from the object storage. The chunk embeddings received from the object storage may be stored in a temporary processing storage in the data management platform, and the cluster hierarchy is generated based on the chunk embeddings stored in this temporary processing storage. This approach allows for efficient processing of large datasets that may exceed the capacity of standard in-memory operations.

The generation of the cluster hierarchy may involve applying a clustering algorithm to the chunk embeddings to generate first clusters at a first level of the hierarchy. For each of these first-level clusters, the clustering algorithm may be applied recursively to the chunk embeddings included in that cluster to generate second-level clusters, which are sub-clusters of the first-level clusters. This recursive process may continue for multiple levels, creating a hierarchical organization of the dataset.

At block 508, the data management platform generates, using a machine learning model, a theme for a cluster of the plurality of clusters. The theme is generated by the machine learning model based on respective chunks of the one or more chunk embeddings included in the cluster. For each cluster, the data management platform may select one or more of the chunks assigned to the cluster and provide the selected chunks to the machine learning model, which may be a large language model. The machine learning model analyzes the content of these chunks and generates a theme that characterizes the semantic content of the cluster.

In addition to generating the theme, the machine learning model may also generate descriptions for the cluster and suggested queries related to the theme. The descriptions may include an external description for display to users and a more detailed internal description for use in generating suggested queries. The suggested queries provide users with starting points for exploring the dataset in the context of the identified theme. In some examples, the internal description is generated first, and used to generate the theme. Providing the machine learning model with multiple descriptions for related clusters allows the model to generate theme names that are not only accurate but also mutually distinctive and non-overlapping.

At block 510, the data management platform stores a tag for each chunk embedding stored in the one or more vector database instances. Each tag identifies a cluster associated with the respective chunk embedding and is for use in filtering the chunk embeddings in response to queries. These tags create a mapping between the chunks and their corresponding clusters in the hierarchy, enabling semantic filtering by theme during subsequent querying operations. The tags may include identifiers for all clusters to which a chunk embedding belongs across the hierarchy, allowing queries at any level of the hierarchy to efficiently retrieve all relevant documents. The tags may additionally, or alternatively, include an indication of the theme associated with the corresponding chunk embedding.

At a later time, the data management platform may receive a query associated with the theme. This query may be one of the suggested queries generated by the machine learning model, or it may be a custom query formulated by a user. The query is associated with the theme either explicitly (by including a theme identifier) or implicitly (by being semantically related to the theme).

The data management platform may then query the one or more vector database instances based on the query and filter results based on the cluster tag corresponding to the cluster associated with the theme. This filtering mechanism leverages the mapping between clusters and chunk embeddings established during the clustering process. When a user selects a theme or issues a query with a theme filter, the system uses the cluster tags to constrain the search space to only those embeddings associated with the selected theme, significantly reducing the computational resources required for processing the query while improving response times.

The query results may be processed by the machine learning model or another machine learning model to generate a response that synthesizes information from the relevant chunks. This response is then presented to the user, providing insights specific to the selected theme or query within the context of that theme.

The hierarchical organization of clusters enables more efficient data exploration across large datasets. When a user needs to find specific information, the system can traverse the cluster hierarchy rather than scanning the entire dataset, significantly reducing the computational resources required. This approach is particularly beneficial for large-scale datasets where exhaustive searches would be prohibitively expensive in terms of processing time and resource utilization.

The association of requests with specific themes and the traversal of the cluster hierarchy provide more targeted and contextually relevant query responses. By mapping queries to themes that characterize clusters, the system can focus on the most semantically relevant portions of the dataset. This thematic targeting ensures that responses are drawn from contextually appropriate content, improving the precision and relevance of information retrieval operations.

Filtering search results based on cluster tags corresponding to specific themes substantially reduces the search space compared to scanning the entire dataset. Rather than processing all chunk embeddings stored in the vector database instances, the system only needs to consider those tagged with the relevant cluster identifier. This focused approach leads to faster response times, particularly for large datasets where comprehensive searches would introduce significant latency.

FIG. 8 is a conceptual diagram illustrating an example mode of operation for a system for data management, in accordance with techniques of the present disclosure. FIG. 8 is described with respect to data management platform 150 of FIG. 2.

Control plane 220 receives, from a user device, an indication to create a dataset (800). Control plane 220 notifies data processing module 183 of the indication to create a dataset (802). Control plane 220 communicates with the storage data plane, here one or more data source systems 160, to start indexing the dataset, based on files stored in the storage data plane (804). Data source systems 160 stream the data (e.g., files in the form of documents) to data management platform 150 (806). Data processing module 183 indexes the data to generate an index.

During the indexing process, data processing module 183 may identify and classify different types of data within the documents. For text content, standard text extraction techniques may be applied. For images, the module 183 may extract visual features or generate textual descriptions using image captioning models. For structured data elements such as tables or metadata fields, the module extracts and formats the structured information. For multimedia content, relevant features or transcriptions may be extracted. This preprocessing step may ensure that diverse data types can be appropriately converted into chunk representations suitable for embedding generation.

Once indexing is complete, the storage data plane may communicate to control plane 220 that indexing is complete (812). Data processing module 183 identifies chunks within the files of the data set and computes respective chunk embeddings for the chunks. Data processing module 183 stores the chunks and respective chunk embeddings to chunk data store 186 (808). Additionally, data processing module 183 stores the chunk embeddings and their associated text to object storage 160C (810) for later use in the clustering procedure. This dual storage approach enables both efficient semantic querying through chunk data store 186 and complete dataset access for clustering operations through object storage 160C as described above. This is because the chunk data store 186 may lack at least one of: the ability to perform clustering processes directly on the chunk data store 186, pagination abilities, efficient batch retrieval capabilities for large datasets, scalability beyond approximately 50 million embeddings, and the computational resources needed to process the entirety of the embedding space simultaneously for hierarchical clustering operations.

Control plane 220 receives, for example from a user device, an indication to start dataset topic exploration (814). Topic is used as another term for "theme" in this description. Data processing module 183 initiates the dataset topic modeling process by sending a request to cluster module 184 (816). This request instructs cluster module 184 to begin the clustering and theme extraction operations on the dataset.

Cluster module 184 initiates the download of chunk embeddings and associated text from object storage 160C to temporary processing storage 157 (820). This transfer is performed because the clustering algorithms require direct access to the complete set of embeddings, which may not be efficiently retrieved through pagination from chunk data store 186. Temporary processing storage 157 may provide high-performance local storage that enables efficient in-memory processing of the embeddings during clustering operations as explained above.

Cluster module 184 iteratively (i.e., for each cluster level of a number of cluster levels) or recursively applies a clustering algorithm to chunk embeddings now loaded into temporary processing storage 157 (818). At each level, cluster module 184 generates clusters from the chunk embeddings. At the next level, cluster module 184 generates, for each cluster of the clusters of the previous level, sub-clusters of the chunk embeddings in the cluster. Cluster module 184 may store, to cluster metadata 188, cluster metadata including a cluster identifier, description of a location of the cluster in the cluster hierarchy, and a list of chunk identifiers for the chunks included in the cluster (832).

Once the clustering process is complete, for each cluster, cluster module 184 selects one or more of the chunks included in the cluster and provides the selected chunks to machine learning model 175, which generates and returns (828) a theme ("Topic name") that characterizes the selected chunks, at least one description that describes the selected chunks (and therefore the cluster as a whole) (826).

A two-phase process for generating the themes may be implemented that accurately represents the content of each cluster while ensuring distinctiveness between related themes. This technical approach addresses the challenge of generating meaningful, non-overlapping theme names for clusters that may contain semantically similar content, particularly for sub-clusters within the same parent cluster.

In the first phase, the system generates detailed descriptions for each cluster by selecting a stratified sample of representative chunk embeddings from the cluster. The selection algorithm ensures that the sample adequately represents the distribution of content within the cluster while remaining within the token limitations of the machine learning model. For clusters containing thousands or millions of chunks, a sampling algorithm that selects approximately 50-100 representative chunks based on their distance from the cluster centroid and from each other may be employed.

Two distinct descriptions may be generated for each cluster: an internal description (for example, three paragraphs long) that captures comprehensive details about the cluster's content, and an external description (for example, two to three lines long) that provides a concise summary for user interface display. The internal description may serve as input for subsequent processing steps and may not be directly exposed to users.

In the second phase, distinctive theme names may be generated for related clusters using a context-aware approach. Rather than generating theme names independently for each cluster, the model 175 may retrieve the internal descriptions of all related clusters (e.g., all sub-clusters of a parent cluster) , asynchronously or synchronously. The model 175 may generate theme names that are mutually distinctive and non-overlapping. This approach prevents the generation of similar theme names like "Financial Accounting" and "Financial DDU" for related clusters, ensuring that users are presented with themes that a human would recognize as being different from each other. To do this, the model 175 may be provided with instructions to generate theme names that are separate from each other and non-overlapping with respect to naming. For instance, if there are six sub-clusters of a parent cluster, all six internal descriptions may be provided together, and the model 175 may be instructed to generate six distinctive theme names.

The technical implementation of this two-phase approach enables the system to generate hierarchical themes that are both semantically accurate and visually distinctive, addressing a key technical challenge in presenting complex data relationships in an intuitive manner. This approach significantly improves upon conventional keyword extraction methods, which often produce overlapping or ambiguous theme names that fail to effectively communicate the relationships between different data clusters.

Cluster module 184 stores cluster metadata, i.e., the themes and descriptions, in association with the corresponding cluster metadata just described to cluster metadata 188. The cluster hierarchy is therefore also a theme hierarchy and is functions effectively as a taxonomy for the dataset.

Cluster module 184 applies generated cluster tags back to the chunk embeddings in chunk data store 186 (830), creating a mapping between the chunks and their corresponding clusters in the hierarchy. This mapping enables semantic filtering by theme during subsequent querying operations.

Each tag may comprise identifiers for some or all clusters to which a chunk embedding belongs across the hierarchy. For example, if a document chunk is assigned to a level-5 cluster in the hierarchy, cluster module 184 may tag the corresponding embedding with identifiers for that cluster and all its parent clusters in the hierarchy. This comprehensive tagging enables queries at any level of the hierarchy to efficiently retrieve all relevant documents.

The hierarchical tagging system may be implemented as a multi-level index structure within the chunk data store 186, allowing for efficient filtering during query operations. When a user selects a theme or issues a query with a theme filter, the system uses these tags to constrain the search space to only those embeddings associated with the selected theme, significantly reducing the computational resources required for processing the query while improving response times.

The hierarchical tagging system may be advantageous when data is sharded across multiple vector database instances, which may be the case for datasets containing hundreds of millions or billions of embeddings. In such distributed architectures, chunk data store 186 may comprise multiple vector database instances, each storing a portion of the total embeddings. When applying cluster tags to chunk embeddings (830), cluster module 184 distributes the tagging operations across all vector database instances, ensuring that each embedding is properly tagged regardless of which instance stores it.

This distributed tagging approach creates a unified semantic layer across physically separated vector database instances. When a user issues a query associated with a specific theme, data management platform 150 can efficiently retrieve relevant information from all vector database instances without requiring the user to know the underlying sharding architecture. The system transparently queries each instance with the appropriate theme filter, consolidates the results, and presents them to the user as if they came from a single source.

The technical implementation of this cross-instance tagging and querying mechanism includes load balancing algorithms that distribute queries optimally across instances based on the distribution of tagged embeddings, ensuring consistent performance regardless of how embeddings are distributed. This architecture enables the system to scale horizontally by adding more vector database instances as the dataset grows, while maintaining the ability to efficiently filter by theme across the entire distributed system.

During the clustering process, control plane 220 may request ("Get") dataset topic modeling status from data processing module 183 (822), which may request the same from cluster module 184 (824). Modules 184, 183 may return an indication of the status to control plane 220, which may display the status via a user interface, for instance.

After the clustering process is complete and all necessary cluster metadata has been stored, data management platform 150 no longer needs the temporary copies of the chunk embeddings and text. Data processing module 183 may instruct (834) the deletion of the chunk embeddings and text from temporary processing storage 157 (836), freeing up local resources for subsequent operations. Additionally, since the essential relationships between chunks and clusters have been captured in the cluster metadata and mapped back to chunk data store 186, data processing module 183 may delete the chunk embeddings and text from object storage 160C (838), conserving storage resources in the data source system.

After the cluster hierarchy has been generated and themes have been extracted, data management platform 150 enables users to navigate and interact with the dataset through this hierarchical organization. User interface module 191 may generate user interfaces that visually represent the cluster hierarchy as shown in FIGS. 7A-7C, allowing users to explore the dataset's thematic structure in an intuitive manner.

When a user accesses the dataset through user device 115, user interface module 191 may initially display the top level (Level 1) of the cluster hierarchy, as shown in FIG. 7A. Each theme at this level represents a major topical area within the dataset, with the size of each theme's visual representation proportionally indicating the volume of data associated with that theme. This visual weighting helps users quickly identify the most prominent themes in their dataset.

The user can navigate deeper into the hierarchy by selecting a specific theme. For example, as illustrated in FIG. 7B, when a user selects the "Revenue" theme from the top level, user interface module 191 updates the display to show the Level 2 sub-themes that exist within the "Revenue" cluster. This drill-down capability allows users to progressively refine their focus to more specific thematic areas within the dataset.

At any level of the hierarchy, the user can view suggested queries that are contextually relevant to the selected theme, as shown in FIG. 7C. These suggested queries are generated by machine learning model 175 based on the internal descriptions of the clusters and representative chunks, providing users with starting points for exploration without requiring them to formulate queries from scratch. This capability is particularly valuable in e-discovery and data exploration scenarios where users may not initially know what specific information to seek within a large dataset.

When a user selects a theme at any level of the hierarchy, data management platform 150 applies this selection as a semantic filter for subsequent queries. This filtering mechanism leverages the mapping between clusters and chunk embeddings that was established during the clustering process and stored in cluster metadata 188. Specifically, when a user selects a theme, data management platform 150 identifies all chunks associated with that theme's cluster and its sub-clusters in the hierarchy.

The technical implementation of this filtering mechanism relies on the relationships established during the clustering process. As described previously, after clustering is complete, cluster module 184 applies cluster tags to the chunk embeddings in chunk data store 186, creating a mapping between each chunk and its corresponding cluster in the hierarchy. Importantly, this mapping may include not only the specific cluster to which a chunk is directly assigned, but also all parent clusters in the hierarchy. For example, if a chunk is assigned to a Level 3 cluster, it may also be tagged with the corresponding Level 2 and Level 1 parent clusters. This hierarchical tagging ensures that when a user selects a higher-level theme, the query can incorporate all chunks belonging to that theme and all its sub-themes.

When a user issues a query, either by selecting one of the suggested queries or by entering a custom query, AI agent 158 may process this query in the context of the selected theme. When a user issues a query after selecting a theme, the theme identifier is used as a filter parameter in the query to chunk data store 186. The query may include both the semantic search based on the user's question and the theme filter that restricts results to only those embeddings tagged with the selected theme. Machine learning model 175 then processes the filtered results to generate a response based only on the chunks that belong to the selected theme or its sub-themes. For example, if a user has navigated to the "Revenue Streams" theme (a sub-theme of "Revenue") and selects a suggested query such as "What are the projected growth rates for our subscription services?", the query processing would include the following steps:

First, all chunks tagged with the "Revenue Streams" theme are identified. This includes chunks directly assigned to the "Revenue Streams" cluster as well as chunks assigned to any sub-clusters of "Revenue Streams" at lower levels of the hierarchy.

Next, machine learning model 175 processes the query against this filtered subset of chunks, identifying those that are semantically relevant to the query about subscription service growth rates.

Finally, machine learning model 175 generates a response based on the identified relevant chunks, synthesizing the information they contain to directly address the user's query. This response is then returned to the user through the user interface.

In some examples, data management platform 150 performs incremental updates to the cluster hierarchy based on changes to the dataset. Data management platform 150 may receive an indication of a change to dataset 190, such as the addition of new documents or other new data or the deletion of existing data from dataset 190, that results in a modified dataset. In response to an indication of deletion of data, data management platform 150 modifies cluster counts to account for data that is no longer in the dataset (i.e., not included in the modified dataset). For example, cluster module 184 may determine that a deleted document has a chunk referenced by (e.g., via a pointer) a theme (cluster) and, based on this determination, decrement the cluster count. A deleted document may have many chunks referenced by different themes in cluster metadata, and cluster module 184 accounts for the many chunks by decrementing cluster counts for the appropriate themes. As another example, data processing module 183 may process new data to generate and write chunk embeddings and text (e.g., steps 808 and 810 of FIG. 8). Cluster module 184 may determine that the newly written chunk embeddings map to existing themes and, based on this determination, add references to the chunks to the theme and update the cluster count appropriately. User interface module 191 may dynamically update the user interface to account for this data change, such as by increasing the size of a user element corresponding to theme to account for an increased cluster count for the theme. In this way, data management platform 150 accounts for incremental updates to datasets.

In some examples, data management platform 150 performs a drift computation for incremental updates. In this context, data drift refers to changes in the statistical properties of the dataset over time as data is added or deleted and is useful as an indication of the difference between the clusters as computed in a prior clustering process for a dataset and the clusters that would be computed based on the current dataset that has been modified. Example algorithms for computing data drift include the Chi-squared test and Jensen-Shannon Divergence, but others may be used. If the drift exceeds a threshold (optionally configurable), data management platform 150 redoes the clustering process to determine a new cluster hierarchy to better represent the modified dataset.

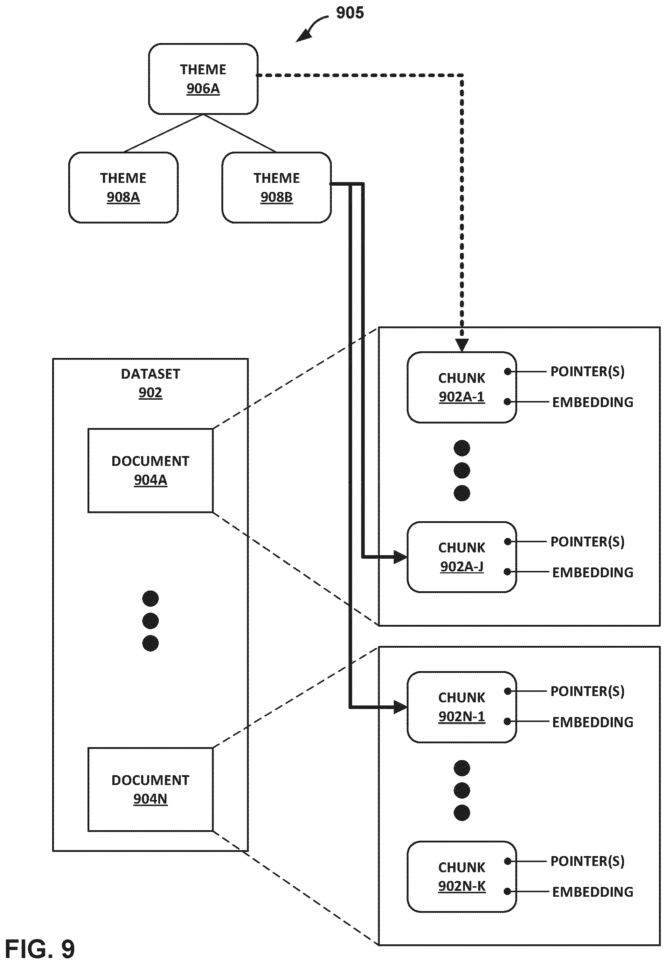

FIG. 9 is a block diagram illustrating data structures and relationships, in accordance with techniques of the present disclosure. A dataset 902 may include one or more documents 904A-904N (collectively, "documents 904"). Data management platform 150 processes each of documents 904 to generate corresponding sets of chunks. For example, document 904A includes chunks 902A-1-902A-J (collectively, "chunks 902A"), which are each text. To avoid duplicating data, each chunk may be located in a document using one or more pointer(s) or offsets to a document location. For example, chunk 902A-J may start at character 12,423 in a document. Each chunk is also associated with its embedding (the "chunk embedding"). The DocumentChunk class described above lists other potential chunk fields usable for implementing the techniques described herein.

Once the data processing, clustering, and theme extraction is completed, data management platform 150 stores cluster metadata representing a theme hierarchy. FIG. 9 depicts a simplified theme hierarchy 905 with 2 levels. A top, first level includes theme 906A corresponding to a cluster, and a second level includes themes 908A and 908B each corresponding to a different cluster. Each theme / cluster includes any chunks assigned to it by the clustering algorithm. Theme 906A includes chunk 902A-1 from document 904A. Theme 908B includes chunk 902A-J from document 904A and chunk 902N-1 from document 904N. This illustrates that, in cluster metadata 188, a chunk (and thus the corresponding document) is tagged with the generated theme(s) for the cluster(s) that includes the chunk. Any query for a higher-level theme will bring in all of the clusters from the child clusters in the cluster hierarchy. Each document of documents 904 may be tagged with multiple tags, because different chunks in the document may be tagged differently.

A user interacting with a visual representation of the cluster hierarchy, such as with the charts of FIGS. 7A-7C, may select a theme and, via the user interface, request that the data management platform 150 obtain and output chunks that belong to the cluster corresponding to the theme. Data management platform 150 may satisfy this request using cluster metadata and the dataset using the data relationships depicted in FIG. 9.

A chunk embedding may be stored to chunk data store 186 with a reference to the data source system that stores the document / data from which the corresponding chunk was taken. When querying a data source using a suggested query or theme that is generated from the chunk, the reference may be used to issue queries to the data source system.

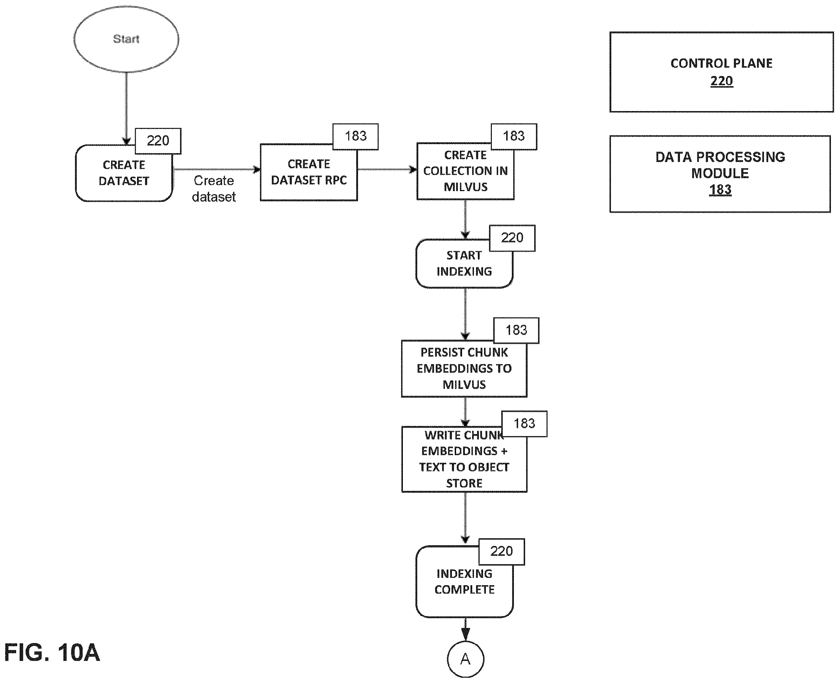

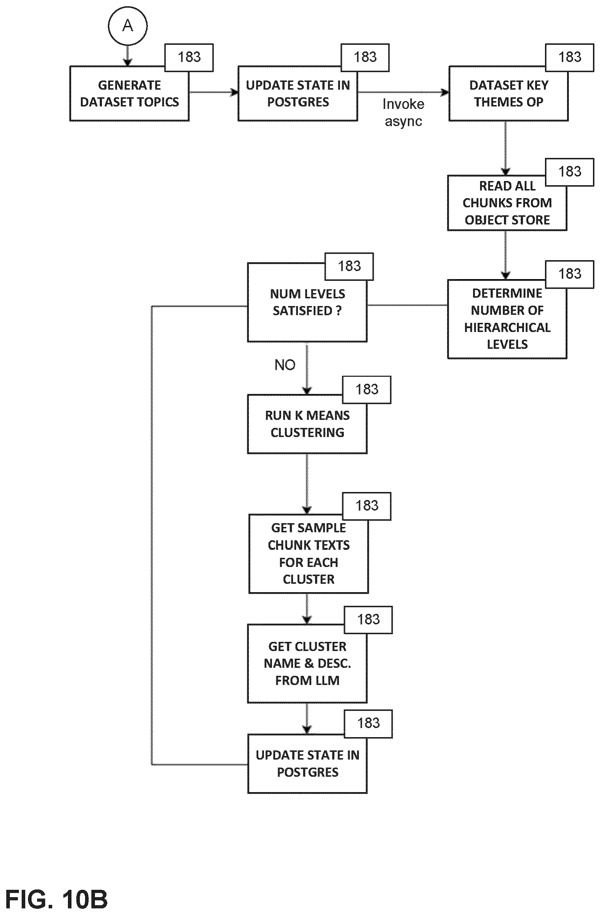

FIGS. 10A-10B are a flowchart illustrating an example mode of operation for a data management platform, in accordance with one or more techniques of this disclosure. In the flowchart, some operations are performed by control plane 220 and labeled as such, while some are performed by data processing module 183 (in some cases directing cluster module 184 and/or model 175). The operations are labeled accordingly. Milvus is a vector database and may be used for chunk data store 186. Postgres (short for PostgresSQL) is a relational database and may be used to store cluster metadata 188. S3 and OneHelios are examples of object storage systems and one or more of these may be used for the object store.

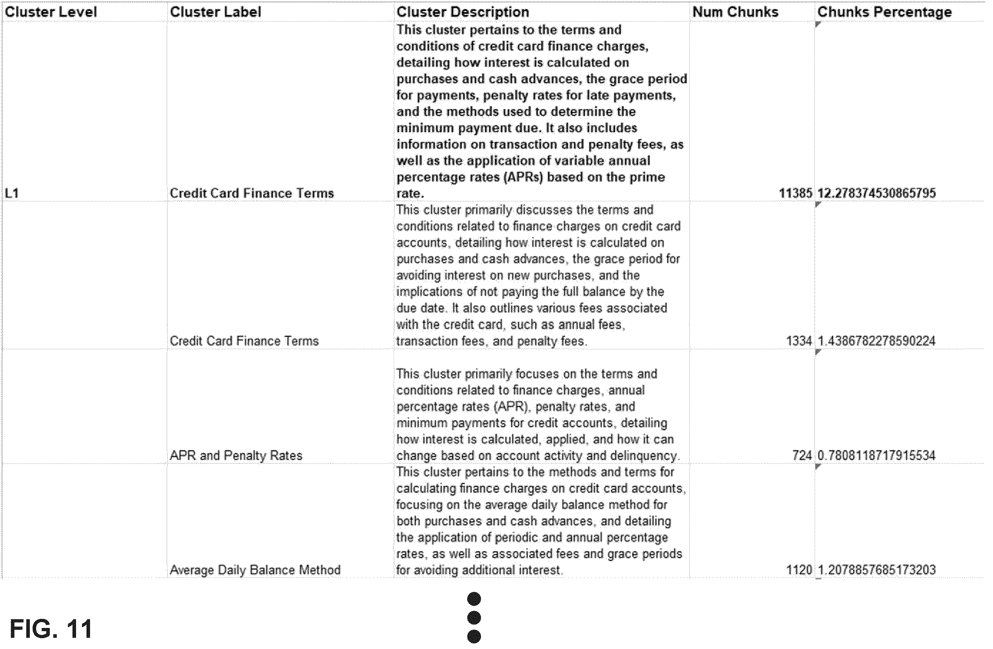

FIG. 11 is a table showing a cluster hierarchy with one cluster and a set of 3 sub-clusters for a dataset. The dataset includes credit card agreements. Each row includes cluster metadata for a cluster generated as described herein. The Cluster Label column for a row includes the theme for the cluster. The Num Chunks column for a row includes the number of chunks assigned to the cluster for the row, and the Chunks Percentage is the percentage of chunks included in the cluster versus included the entire dataset. E.g., 12.27% of the chunks of the dataset are included in the Credit Card Finance Terms cluster.

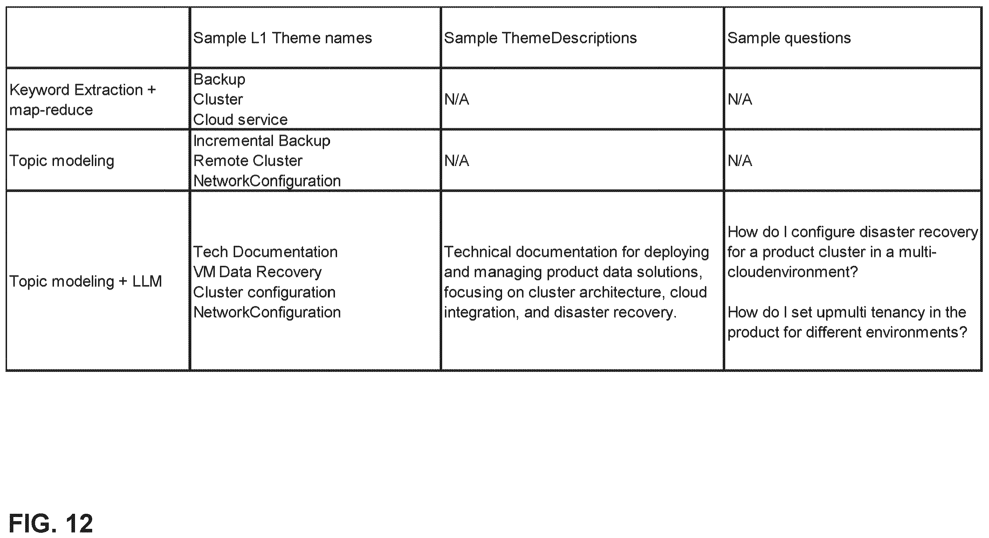

FIG. 12 is a table showing example results from different approaches to theme extraction. The Topic modeling + LLM approach of the techniques of this disclosure provides better Theme names, Theme descriptions, and sample queries suggested for the user.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

In accordance with one or more aspects of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structure or any other structure suitable for implementation of the techniques described. In addition, in some examples, the functionality described may be provided within dedicated hardware and/or software modules. Also, the techniques could be fully implemented in one or more circuits or logic elements.

Processing means, as used herein, may comprise processing circuitry as has been described above. In some examples, the processing means may comprise at least one processor and at least one memory with computer code comprising a set of instructions, which, when executed by the at least one processor, causes the at least one processor to perform any of the functions described herein. In some examples, the processing means may receive computer code comprising the set of instructions from at least one memory coupled to the processing means.

The techniques of this disclosure may be implemented in a wide variety of devices or apparatuses, including a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

Various aspects of the techniques may enable the following examples.
Example 1. A computing system comprising:
   one or more storage devices storing instructions; and
   processing circuitry having access to the one or more storage devices and configured with the instructions to:
      compute chunk embeddings for respective chunks obtained from a dataset;
      generate, based on the chunk embeddings, a cluster hierarchy having a plurality of clusters, each cluster of the plurality of clusters including one or more of the chunk embeddings;
      generate, using a machine learning model, a theme for a cluster of the plurality of clusters, the theme generated by the machine learning model based on respective chunks of the one or more of the chunk embeddings included in the cluster; and
      output an indication of the theme for the cluster.
Example 2. The computing system of Example 1, wherein to generate the cluster hierarchy the processing circuitry is configured to:
   apply a clustering algorithm to the chunk embeddings to generate first clusters of the plurality of clusters, wherein the first clusters comprise the cluster; and
   apply the clustering algorithm to the one or more of the chunk embeddings included in the cluster to generate second clusters of the plurality of clusters, wherein the second clusters are sub-clusters of the cluster.
Example 3. The computing system of Example 1, wherein the processing circuitry is configured to:
   generate, using the machine learning model, respective themes for the plurality of clusters, each theme for a corresponding cluster of the plurality of clusters generated by the machine learning model based on respective chunks of at least one of the one or more of the chunk embeddings included in the corresponding cluster; and
   output an indication of the themes for the plurality of clusters.
Example 4. The computing system of Example 3, wherein to output the indication of the themes for the cluster, the processing circuitry is configured to:
   generate and output, for display at a display device, a user interface comprising a hierarchical chart, wherein the hierarchical chart displays themes generated for one level of the cluster hierarchy.
Example 5. The computing system of Example 1, wherein the processing circuitry is configured to:
   generate, using the machine learning model, a suggested query, the suggested query generated by the machine learning model based on a selected chunk corresponding to one of the chunk embeddings included in the cluster; and
   output an indication of the suggested query.
Example 6. The computing system of Example 5, wherein the processing circuitry is configured to:
   receive an indication of selection, by a user, of the suggested query;
   query the dataset using the suggested query.
Example 7. The computing system of Example 1,
   wherein the machine learning model comprises a first machine learning model, and
   wherein to query the dataset using the suggested query, the processing circuitry is configured to:
      query, with a second machine learning model, a semantic index for the dataset using the suggested query;
      obtain a query response; and
      output an indication of the query response.
Example 8. The computing system of Example 7, wherein the first machine learning model and the second machine learning model are different machine learning models.
Example 9. The computing system of Example 1, wherein the machine learning model comprises a large language model.
Example 10. The computing system of Example 1,
   wherein the machine learning model comprises a first machine learning model, and
   wherein the processing circuitry is configured to:
      perform semantic indexing on the dataset to generate a semantic index for the dataset;
      receive an indication of user input at a user interface, the user input selecting the theme;
      query, with a second machine learning model, the semantic index for the dataset using the theme;
      obtain a query response; and
      output an indication of the query response.
Example 11. A method comprising:
   computing, by a data management platform, chunk embeddings for respective chunks obtained from a dataset;
   generating, by the data management platform, based on the chunk embeddings, a cluster hierarchy having a plurality of clusters, each cluster of the plurality of clusters including one or more of the chunk embeddings;
   generating, by the data management platform, using a machine learning model, a theme for a cluster of the plurality of clusters, the theme generated by the machine learning model based on respective chunks of the one or more of the chunk embeddings included in the cluster; and
   outputting, by the data management platform, an indication of the theme for the cluster.
Example 12. The method of Example 11, wherein generating the cluster hierarchy comprises:
   applying a clustering algorithm to the chunk embeddings to generate first clusters of the plurality of clusters, wherein the first clusters comprise the cluster; and
   applying the clustering algorithm to the one or more of the chunk embeddings included in the cluster to generate second clusters of the plurality of clusters, wherein the second clusters are sub-clusters of the cluster.
Example 13. The method of Example 11, further comprising:
   generate, by the data management platform, using the machine learning model, respective themes for the plurality of clusters, each theme for a corresponding cluster of the plurality of clusters generated by the machine learning model based on respective chunks of at least one of the one or more of the chunk embeddings included in the corresponding cluster; and
   outputting, by the data management platform, an indication of the themes for the plurality of clusters.
Example 14. The method of Example 13, wherein outputting the indication of the themes for the cluster comprises:
   generating and outputting, for display at a display device, a user interface comprising a hierarchical chart, wherein the hierarchical chart displays themes generated for one level of the cluster hierarchy.
Example 15. The method of Example 11, further comprising:
   generating, by the data management platform, using the machine learning model, a suggested query, the suggested query generated by the machine learning model based on a selected chunk corresponding to one of the chunk embeddings included in the cluster; and
   outputting, by the data management platform, an indication of the suggested query.
Example 16. The method of Example 15, further comprising:
   receiving, by the data management platform, an indication of selection, by a user, of the suggested query;
   querying, by the data management platform, the dataset using the suggested query.
Example 17. The method of Example 11,
   wherein the machine learning model comprises a first machine learning model, and
   wherein querying the dataset using the suggested query comprises querying, with a second machine learning model, a semantic index for the dataset using the suggested query, the method further comprising:
      obtaining, by the data management platform, a query response; and
      outputting, by the data management platform, an indication of the query response.
Example 18. The method of Example 17, wherein the first machine learning model and the second machine learning model are different machine learning models.
Example 19. The method of Example 11, wherein the machine learning model comprises a first machine learning model, the method further comprising:
   performing, by the data management platform, semantic indexing on the dataset to generate a semantic index for the dataset;
   receiving, by the data management platform, an indication of user input at a user interface, the user input selecting the theme;
   querying, by the data management platform, with a second machine learning model, the semantic index for the dataset using the theme;
   obtaining, by the data management platform, a query response; and
   outputting, by the data management platform, an indication of the query response.
Example 20. Non-transitory computer-readable media comprising instructions that, when executed by processing circuitry, cause the processing circuitry to:
   compute chunk embeddings for respective chunks obtained from a dataset;
   generate, based on the chunk embeddings, a cluster hierarchy having a plurality of clusters, each cluster of the plurality of clusters including one or more of the chunk embeddings;
   generate, using a machine learning model, a theme for a cluster of the plurality of clusters, the theme generated by the machine learning model based on respective chunks of the one or more of the chunk embeddings included in the cluster; and
   output an indication of the theme for the cluster.

## Claims

1. A method comprising:
computing, by a data management platform, chunk embeddings for respective chunks obtained from a dataset;
storing, by the data management platform, the chunk embeddings at one or more vector database instances;
generating, by the data management platform, based on the chunk embeddings, a cluster hierarchy having a plurality of clusters, each cluster of the plurality of clusters including one or more of the chunk embeddings;
generating, by the data management platform, using a machine learning model, a theme for a cluster of the plurality of clusters, the theme generated by the machine learning model based on respective chunks of the one or more of the chunk embeddings included in the cluster; and
storing, by the data management platform, a tag for each chunk embedding stored in the one or more vector database instances, wherein each tag identifies a cluster associated with the respective chunk embedding and is for use in filtering the chunk embeddings in response to queries.

2. The method of claim 1, further comprising:
storing, by the data management platform, the chunk embeddings in object storage that is different from the one or more vector database instances; and
receiving, by the data management platform, the chunk embeddings from the object storage,
wherein the cluster hierarchy is generated based on the chunk embeddings received from the object storage.

3. The method of claim 2, wherein the chunk embeddings received from the object storage are stored in a temporary processing storage in the data management platform and the cluster hierarchy is generated based on the chunk embeddings stored in the temporary processing storage, wherein the method further comprises:
after generating the tags and theme, deleting the chunk embeddings from the temporary processing storage and the object storage.

4. The method of any preceding claim, wherein generating the cluster hierarchy comprises:
applying a clustering algorithm to the chunk embeddings to generate first clusters of the plurality of clusters, wherein the first clusters comprise the cluster; and
applying the clustering algorithm to the one or more of the chunk embeddings included in the cluster to generate second clusters of the plurality of clusters, wherein the second clusters are sub-clusters of the cluster.

5. The method of any preceding claim, further comprising:
generating, by the data management platform, using the machine learning model, respective themes for the plurality of clusters, each theme for a corresponding cluster of the plurality of clusters generated by the machine learning model based on respective chunks of at least one of the one or more of the chunk embeddings included in the corresponding cluster.

6. The method of claim 5, wherein generating the themes comprises:
generating, by the data management platform, a description for each cluster of the plurality of plurality of clusters by providing a set of representative chunks from each cluster to the machine learning model; and
generating, by the data management platform, the themes by providing the descriptions for related clusters simultaneously to the machine learning model.

7. The method of claim 5 or claim 6, further comprising:
generating and outputting, for display at a display device, a user interface comprising a hierarchical chart, wherein the hierarchical chart displays themes generated for one level of the cluster hierarchy.

8. The method of any preceding claim, wherein the request comprises a suggested query, the method further comprising:
generating, by the data management platform, using the machine learning model, the suggested query, the suggested query generated by the machine learning model based on a selected chunk corresponding to one of the chunk embeddings included in the cluster; and
outputting, by the data management platform, an indication of the suggested query.

9. A computing system comprising:
processing means configured to:
compute chunk embeddings for respective chunks obtained from a dataset;
store the chunk embeddings at one or more vector database instances;
generate based on the chunk embeddings, a cluster hierarchy having a plurality of clusters, each cluster of the plurality of clusters including one or more of the chunk embeddings;
generate, using a machine learning model, a theme for a cluster of the plurality of clusters, the theme generated by the machine learning model based on respective chunks of the one or more of the chunk embeddings included in the cluster; and
store a tag for each chunk embedding stored in the one or more vector database instances, wherein each tag identifies a cluster associated with the respective chunk embedding and is for use in filtering the chunk embeddings in response to queries.

10. The computing system of claim 9, wherein the processing means is further configured to:
store the chunk embeddings in object storage that is different from the one or more vector database instances; and
receive the chunk embeddings from the object storage,
wherein the cluster hierarchy is generated based on the chunk embeddings received from the object storage.

11. The computing system of claim 10, wherein the chunk embeddings received from the object storage are stored in a temporary processing storage and the cluster hierarchy is generated based on the chunk embeddings stored in the temporary processing storage, wherein the processing means is further configured to:
after generating the tags and theme, delete the chunk embeddings from the temporary processing storage and the object storage.

12. The computing system of any of claims 9 to 11, wherein to generate the cluster hierarchy the processing means is configured to:
apply a clustering algorithm to the chunk embeddings to generate first clusters of the plurality of clusters, wherein the first clusters comprise the cluster; and
apply the clustering algorithm to the one or more of the chunk embeddings included in the cluster to generate second clusters of the plurality of clusters, wherein the second clusters are sub-clusters of the cluster.

13. The computing system of any of claims 9 to 12, wherein the processing means is configured to:
generate, using the machine learning model, respective themes for the plurality of clusters, each theme for a corresponding cluster of the plurality of clusters generated by the machine learning model based on respective chunks of at least one of the one or more of the chunk embeddings included in the corresponding cluster; and
output an indication of the themes for the plurality of clusters.

14. The computing system of any of claims 9 to 13, wherein the machine learning model comprises a large language model.

15. One or more computer-readable media comprising instructions that, when executed by processing means, cause the processing means to perform the method of any of claims 1 to 8.
